# EUROPEAN PATENT SPECIFICATION

(11) **EP 1 788 764 B1**
(45) Date of publication and mention of the grant of the patent: **15.08.2012**
(21) Application number: 05749626.7
(22) Date of filing: 26.05.2005
(51) Int. Cl.: H04L 12/66

(54) **THE PROCESS SYSTEM FOR THE PACKET DOMAIN SERVICE SIGNAL AND THE METHOD USING THE SAME**
PROZESSSYSTEM FÜR DAS PAKETBEREICHS-DIENSTSIGNAL UND VERFAHREN ZU SEINER VERWENDUNG
SYSTEME DE TRAITEMENT DE SIGNAL DE SERVICE DE DOMAINE DE PAQUET ET PROCEDE UTILISANT CE SYSTEME

(30) Priority: 07.09.2004 CN 200410079901
(43) Date of publication of application: 23.05.2007
(73) Proprietor: Huawei Technologies Co., Ltd., Longgang District, Shenzhen Guangdong 518129 (CN)
(72) Inventor: SHI, Youzhu, Shenzhen, Guangdong 518129 (CN); ZHU, Dongming, Shenzhen, Guang Dong 518129 (CN)
(74) Representative: Thun, Clemens
(86) International application number: PCT/CN2005/000734
(87) International publication number: WO 2006/026901

(56) References cited:
- WO-A1-03/036905
- CN-A- 1 469 605
- KR-A- 2002 043 434
- US-A1- 2002 024 943
- "3rd Generation Partnership Project;Technical Specification Group Core Network;Interworking between the IM CN subsystem and CS networks(Release 6)" 3GPP DRAFT; 29163-151, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG3, no. Sophia Antipolis, France; 20030401, 7 April 2003 (2003-04-07), XP050407439 [retrieved on 2003-04-07]
- 3GPP DRAFT; S2-042797, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20040823, 23 August 2004 (2004-08-23), XP050249959 [retrieved on 2004-08-23]

## Description

### Field of the Technology

The present invention relates to the telecommunication service network technology based on wideband packet transmission, and especially, to a system and a method for processing a packet domain signal.

### Background of the Invention

The Integrated Services Digital Network (ISDN) originated in 1967 is a communication network developed on the basis of the Integrated Digital Network (IDN). The ISDN supports end-to-end digital connections and various communication services, such as a telephone service, and provides standard user-network interfaces to be accessed by various terminals.

The Public Switched Telephone Network (PSTN), as a public communication network, provides voice and data communication services which are based on switched lines.

The PSTN/ISDN services generally refer to various services provided to users in the conventional PSTN/ISDN networks.

Conventionally, the PSTN/ISDN services are implemented in a circuit switched domain. With the fast development of the packet-based communication technologies, at present, the PSTN/ISDN services may also be implemented in a packet domain through the softswitch of a Next Generation Network (NGN).

There is a broad sense NGN and a narrow sense NGN.

The broad sense NGN generally refers to all the softswitch architectures in which bearer is separated from control, and the telecommunication service networks using broadband packets as bearer whether the network provides fixed services or mobile services to the users. The telecommunication service networks using broadband packets as bearer may be Internet Protocol (IP) networks or Asynchronous Transfer Mode (ATM) networks. Referring to the following definition of NGN given in the Telecommunication Standardization Sector of International Telecommunication Union (ITU-T) in Feb. 2004, an NGN is a packet-based network, provides multiple services including the telecommunication service, and is capable of using multiple bandwidths and transmission techniques of abilities of Quality of Service (QoS) to implement separation of service functions from bottom-layer transmission techniques; the NGN allows an access of users to networks of different service providers and supports general mobility, which realizes consistent and continuous provision of services to users.

The narrow sense NGN refers to networks based on broadband packet bearer, providing C4/C5 services and IP multimedia services to the users accessing fixed networks. In embodiments of the present invention, the NGN refers to a "narrow sense NGN" unless otherwise mentioned.

In a fixed NGN, the softswitch serves as a call processing node in the network, implementing the PSTN/ISDN services. A PSTN user or an ISDN user accesses the softswitch through access devices, such as an Audio Gateway (AG) and an Integrated Access Device (IAD), the softswitch implements the session control, the service control, and the functions of storing and managing user data, and thus the PSTN/ISDN services are provided to the PSTN user or the ISDN user.

In a technical solution implemented through the softswitch, the functions of call control and service control are coupled to one network node and implemented in the network node, which results in poor flexibility and is unfavourable to fast deployment and extension of services.

Furthermore, modification of a function may bring about changes of other functions, increasing the potential risk. And deployment and extension of some services will even lead to the upgrading of the whole network node, resulting in a high cost. The softswitch can be accessed by fixed terminals through various access devices, such as access devices based on different protocols including the AG and the IAD, and the implementation of the PSTN/ISDN services is related to the access of the users.

Besides the implementation of the PSTN/ISDN services, the softswitch also needs to provide the Service Switch Point (SSP) function to trigger an intelligent service. And the PSTN/ISDN services and the intelligent service conflict with each other because there is no unified trigger mechanism.

The PSTN/ISDN services are distributed and implemented in call processing nodes in the NGN, thus the call processing nodes may not cooperate with each other to implement the PSTN/ISDN services. And there is no definite service arbitrating point when a service conflict occurs.

Since the PSTN/ISDN services are distributed and implemented in the call processing nodes in the NGN, each service needs to be implemented repeatedly in all the softswitches in the network when a unified service brand is popularized, leading to the high cost of service popularization.

The PSTN/ISDN services are distributed and implemented in the call processing nodes in the NGN, it is difficult for the PSTN/ISDN services to function as a basic network service ability, i.e., as a shared network component, to cooperate with other services in the NGN to provide combined value-added services.

The user data are distributed in the call processing nodes in the NGN and the users could only acquire services at access points of the users, thus it is difficult to acquire the same services as previous services if the terminals of the users are allowed to move, and the popularization of the unified service brand is also limited.

The call processing nodes in the NGN may not share the user data of the users accessing the NGN owing to the distribution of the user data, and it is thus difficult to provide a cross call processing node service (a wide area service).

There is also a system with the function similar to that of the fixed NGN above in a Third Generation (3G) mobile telecommunication network, which is an Internet Protocol Multimedia Subsystem (IMS).

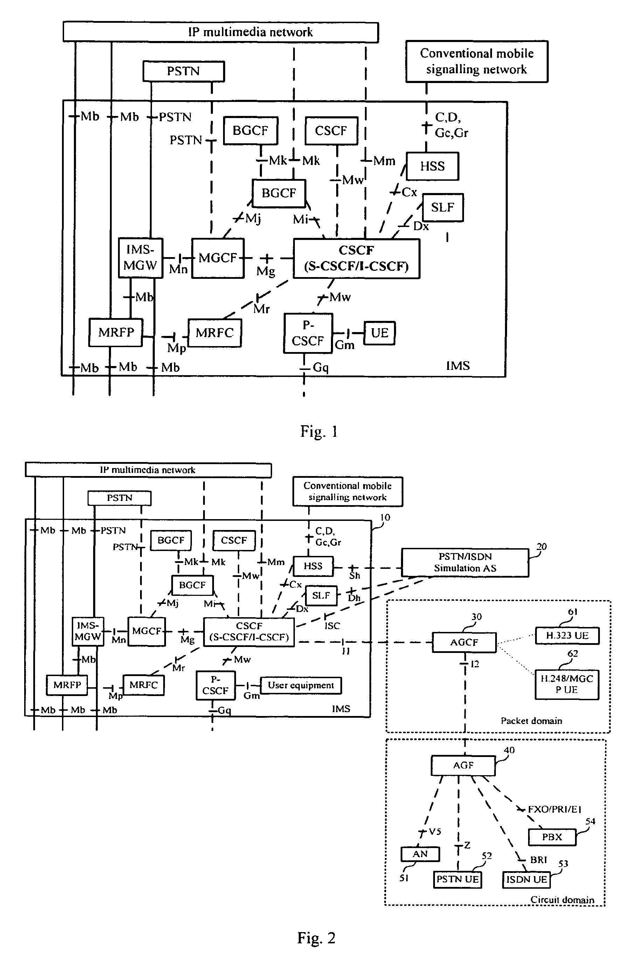

The IMS is an IP multimedia subsystem in a Wideband Code Division Multiple Access (WCDMA) network defined in the 3rd Generation Partnership Project (3GPP) R5/R6 standard and is a target network in the 3G mobile telecommunication network for implementing packet voice and packet data and providing unified multimedia services and applications. The IMS uses an IP packet domain as its bearer channel of signalling control and media transmission, uses the Session Initiation Protocol SIP, as signalling of the call control, and achieves separation of service management, session control and bearer accessing. Fig.1 shows network architecture of the IMS in the 3GPP R5/R6 standard. Refer to "3GPP TS 23.002" for detailed descriptions of each network entity and related interfaces in the IMS.

Although the IMS provides a mechanism for separation of the service management, the session control and the bearer accessing, a PSTN user and an ISDN user may not access the IMS through a visited domain node defined by the IMS standard because the IMS standard is put forward initially for a 3G mobile system, requires the terminal to support an access control protocol of the IMS (typically the SIP) and does not support the access management of the PSTN user, the ISDN user, and the H.323, H.248, MGCP user. As a result, the PSTN user, the ISDN user, and the H.323, H.248, MGCP user have to acquire related services through other network devices. And such other network devices either have all or part of the shortcomings of the fixed NGN, or, even with the shortcomings overcome, belong to different networks from the network to which the IMS domain belongs and the network has to be built repeatedly.

In the Standard 3GPP TS 29.163 v1.5.1 "Technical Specification Group Core Network; Interworking between the IM CN subsystem", section 6.1.2.1 is disclosed an IM CN Subsystem, an IM GW in the IM CN Subsystem and an SGW.

In the Standard 3GPP DRAFT; "3GPP and ETSI TISPAN Workshop on NGN-IMS Sophia Antipolis, 22-23 June 2004" section 7, it discloses the possible reuse of IMS to support PSTN/ISDN service emulation.

### Summary of the Invention

The invention is defined as a system (claim 1) for processing a packet domain service signal, as a method (claim 8) when a user makes an outgoing call, and as a method (claim 14) when a user makes an incoming call. Embodiments of the present invention provide a system for processing a packet domain service signal and a method for processing a packet domain service signal, enabling a terminal that does not support an accessing control protocol of an Internet Protocol Multimedia Subsystem, IMS, to access the IMS and acquire services in the IMS.

- An embodiment of the present invention provides a system for processing a packet domain service signal, including:
an Internet Protocol Multimedia Subsystem, IMS;
at least one user equipment for processing a service signal of a Public Switched Telephone Network, PSTN, /Integrated Services Digital Network, ISDN;
at least one access gateway function for implementing a function of conversion between a narrowband voice in a circuit domain and an Internet Protocol, IP, media flow in a packet domain, and a function of conversion between user interface signalling in the circuit domain and call control signalling in the packet domain; and
at least one access gateway control function for implementing access management and call control for the access gateway function, and enabling the user equipment which accesses the access gateway control function through the access gateway function to access a Call Session Control Function, CSCF, in the IMS, wherein the access gateway control function comprises means for obtaining a user identify of a calling user according to an access gateway function identity and a user port identity, or locating an access gateway function and a user port which a called user accesses according to a user identity; and converting between Session Initiation Protocol, SIP, and an interface protocol of an interface through which the access gateway control function is connected to the access gateway function.

The system further includes a first application server for providing a function of service control of the PSTN/ISDN according to service triggering of the CSCF.

The access gateway control function is further configured for controlling a basic service and a supplementary service of the PSTN/ISDN;
the function of service control of the PSTN/ISDN provided by the first application server is a function of controlling an extended value-added service, such as network directory, instant message, Presence service, unified message service, click dialling, click transfer, click queue, click convention, intelligent routing, customized ring back tone, calling user coloured image, task customization and prompt, and self-help management.

The access gateway control function is further configured for controlling a basic service, a supplementary service and an extended value-added service of the PSTN/ISDN, such as network directory, instant message, Presence service, unified message service, click dialling, click transfer, click queue, click convention intelligent routing, customized ring back tone, calling user coloured image, task customization and prompt, and self-help management.

A protocol supported by the access gateway control function includes at least one_ of an H.248 protocol, a Media Gateway Control Protocol, a Session Initiation Protocol, an SIP-I protocol which encapsulates service information of the Integrated Services Digital Network transferred end-to-end using the Session Initiation Protocol and a user adaptation protocol of user adaptation/link access protocol in version 5 of integrated service digital network Q.921 based on signalling transfer.

The access gateway control function is further configured for managing the access gateway function and a user Identity, ID, of the user equipment accessing through the access gateway function in the Internet Protocol Multimedia Subsystem.

The access gateway control function is configured for managing one or more access gateway functions, storing a first public ID and a private ID of a user of the Internet Protocol Multimedia Subsystem domain corresponding to each access gateway function, and a relation of the first public ID and the private ID to the access gateway function;
all the user equipments accessing through the access gateway function share the private ID of the access gateway function;
the multiple user equipments accessing through the access gateway function are distinguished by ports, and the access gateway control function stores a second public ID of a user in the Internet Protocol Multimedia Subsystem domain for each of the multiple user equipments, and stores the relation of the private ID, the public ID to the access gateway function accessed by the user equipment and a number of a port;
when a service request sent by the user equipment through the access gateway function reaches the access gateway control function, the access gateway control function acquires the public ID and the private ID of the user equipment according to the access gateway function and the number of the port;
when receiving the service request for the user equipment, the access gateway control function acquires the access gateway function accessed by the user equipment and the number of the port according to the public ID and stored information.

The access gateway control function is further configured for managing access of the user equipment accessing through the access gateway function in the Internet Protocol Multimedia Subsystem domain through a registration process in the Internet Protocol Multimedia Subsystem.

The access gateway control function is configured for mapping a signalling flow of a registration process of the access gateway function to the access gateway control function, and mapping a signalling flow of an initial registration process of a user in the Internet Protocol Multimedia Subsystem domain, in which
the access gateway control function cooperates with a Session Control Function and a Home Subscriber Server to implement access authentication of the access gateway function; and/or the access gateway control function negotiates with the access gateway function for a security algorithm, stores information related to the access gateway function, and protects an interactive message using the security algorithm negotiated in a subsequent interaction process;
the access gateway control function is further configured for mapping a signalling flow of a process of reporting abnormal state by the access gateway function and a signalling flow of a process of de-registration of the user in the Internet Protocol Multimedia Subsystem domain.

The access gateway control function implements the authentication of the access gateway function in a manner of authentication in the Internet Protocol Multimedia Subsystem and key negotiation maps signalling process.

The Home Subscriber Server configures the authentication algorithm supported by itself according to the ability of the access gateway function, and cooperates with the call session control function to implement the authentication of the access gateway function using the configured authentication algorithm.

For the access gateway function that has not the ability of calculating an integrity protecting key and encrypting a key by itself, the Home Subscriber Server passes a authentication token carrying an integrity protecting key and an encrypted key to the access gateway function through the access gateway control function to implement the authentication and the key negotiation in the key negotiation.

The manner adopted by the security algorithm may be the Internet Protocol network security protocol.

The access gateway control function is further configured for implementing registration and de-registration of a user equipment accessing the access gateway function in the Internet Protocol Multimedia Subsystem domain through mapping port state reporting process of the access gateway function and the registration and de-registration process of a user in the Internet Protocol Multimedia Subsystem, specifically, implementing registration of the user equipments corresponding to the port when the access gateway function reports that the state of the port is normal, and implementing de-registration of the user equipments corresponding to the port when the access gateway function reports that the state of the port is abnormal; implementing allocation of a serving node in the Internet Protocol Multimedia Subsystem for the user equipment's session processing, building the association between the serving node and the access gateway control function, as well as downloading the subscription data of the user from the serving node and/or a related service server in the registration process, and cleaning out information of the serving node in the de-registration process.

The registration of the user equipment accessing through the access gateway function in the Internet Protocol Multimedia Subsystem domain adopts a manner of re-registration without authentication; after implementing the registration of the user in the Internet Protocol Multimedia Subsystem domain through the registration process, the access gateway control function records related address information, including information of the access address and port of the user, as well as information of the address of the serving node in the Internet Protocol Multimedia Subsystem domain allocated for the user.

The access gateway control function is further configured for maintaining the valid registration state of the user equipment accessing through the access gateway function in the Internet Protocol Multimedia Subsystem domain through mapping by the access gateway function mapping the port state reporting process of the access gateway function, an auditing process of the port state, and a periodical re-registration process in the Internet Protocol Multimedia Subsystem domain.

The access gateway control function stores a valid term determined through negotiation in the registration process of the user, monitoring the valid term before the user logs out;
initiates a port auditing operation to the access gateway function when the valid term is due, and performs the periodical re-registration in the Internet Protocol Multimedia Subsystem domain according to the result of the auditing.

The access gateway control function stores locally the state of the port reported by the access gateway function;
the access gateway control function stores the valid term determined through negotiation in the registration of the user and monitors the valid term before the user logs out;
the access gateway control function performs directly the periodical re-registration to the Internet Protocol Multimedia Subsystem domain according to the state of the port stored locally when the valid term is due.

Special identification of the user data of the user accessing through the access gateway function is made in a Home Subscriber Server in the Internet Protocol Multimedia Subsystem; the serving node and/or the related Application Server are further configured for maintaining statically the registration state of the user and storing the user data according to the special identification in the downloaded user data before the user logs out on his own initiative.

The information of the serving node of the user equipment is configured statically in the Home Subscriber Server in the Internet Protocol Multimedia Subsystem and the access gateway control function;
the call session control function and/or the related Application Server in the Internet Protocol Multimedia Subsystem are further configured for storing statically, or when receiving a session creating request from the user equipment, determining to download the user data, and storing statically the user data before the user logs out, or when receiving a session creating request for the user equipment, determining to download the user data, deleting the data when a preset time is due, downloading again the user data when receiving a session creating request again;
the call session control function in the Internet Protocol Multimedia Subsystem and/or the related Application Server are further configured for judging and storing the user data statically according to a specific ID in a session creating request, or an information resource, or the public ID of the user equipment in the Internet Protocol Multimedia Subsystem domain, or determining to download the user data when receiving a session creating request.

Preferably, the access gateway control function is further configured for accepting a subscription of an Application Server for the state of the user equipment, and sending a event notification to the corresponding Application Server when the state of the user equipment is changed.

The system further includes at least one packet user equipment for processing packet service signals as a terminal; wherein
the access gateway control function is further configured for making the user equipment to access the call session control function in the Internet Protocol Multimedia Subsystem as a proxy.

The protocols used by the packet user equipment include: H.248 protocol, the Media Gateway Control Protocol, and H.323 protocol.

The access gateway control function is further configured for managing access of a user equipment accessing directly in the Internet Protocol Multimedia Subsystem domain through a registration process in the Internet Protocol Multimedia Subsystem.

The access management of the access gateway control function further includes:
implementing the initial registration and logging out of an H.323 end point in the Internet Protocol Multimedia Subsystem domain when the H.323 end point registers and logs out, specifically, in the initial registration process, allocating a serving node in the Internet Protocol Multimedia Subsystem controlling the service processing of the user equipment, building the association between the serving node and the access gateway control function, and downloading the subscription data of the user from the serving node and/or the related Application Server, while in the de-registration process, cleaning out information of the serving node.

In the initial registration process, the access gateway control function is further configured for cooperating with the call session control function and the Home Subscriber Server to implement the access authentication of the packet user equipment in the Internet Protocol Multimedia Subsystem system, and/or negotiating with the terminal for a security algorithm, and then protecting interactive messages using the negotiated security algorithm in the subsequent interaction process.

The access gateway control function maps signalling process and implements the authentication of the packet user equipment in a manner of authentication in the Internet Protocol Multimedia Subsystem and key negotiation.

An authentication algorithm supported by the packet user equipment is configured in the Home Subscriber Server according to the ability of the packet user equipment, and then the authentication of the packet user equipment is implemented using the configured authentication algorithm.

For the access gateway function that has not the ability of calculating an integrity protecting key and encrypting a key by itself, the Home Subscriber Server passes a authentication token carrying an integrity protecting key and an encrypted key to the access gateway function through the access gateway control function to implement the authentication and the key negotiation in the key negotiation.

The access management of the access gateway control function further includes:
the access gateway control function maintains, as an H.323 Gatekeeper, the effectual registration state of an H.323 user equipment accessing directly in the Internet Protocol Multimedia Subsystem domain by mapping the state monitoring mechanism of H.323 and the periodical re-registration process in the Internet Protocol Multimedia Subsystem domain.

The state monitoring mechanism of H.323 may be one of the following manners:
a poll manner of periodically sending information request by the access gateway control function; or
a reporting manner of periodically reporting information report on its own initiative by the packet user equipment according to the instruction of the access gateway control function.

Special identification of the user data of the packet user is made in a Home Subscriber Server in the Internet Protocol Multimedia Subsystem.
the serving node and/or the related Application Server in the Internet Protocol Multimedia Subsystem are further configured for maintaining statically the registration state of the user and storing the user data according to the special identification in the downloaded user data before the user logs out on his own initiative.

In the system, the access gateway control function is further configured for implementing a unified control of the calling processes of the user equipment accessing through the access gateway function and/or the packet user equipment accessing directly in the Internet Protocol Multimedia Subsystem.

The access gateway control function is further configured for mapping the basic calling processes and session creating processes in the Internet Protocol Multimedia Subsystem domain of the user equipment accessing through the access gateway function and/or the packet user equipment accessing directly, and performing a bi-directional conversion between the Session Initiation Protocol of the Internet Protocol Multimedia Subsystem and various control protocols which are not of the Internet Protocol Multimedia Subsystem during the mapping process and after the session is built so as to achieve a unified calling control.

The access gateway control function inquires about the record stored when a calling user equipment registered according to the calling user equipment's ID, routes the session request of the user equipment to the serving node in the Internet Protocol Multimedia Subsystem allocated for the user, and the serving node triggers the Application Server service of the calling user equipment; routes the session request, which is from the serving node of the called user and pointed to the user equipment, by inquiring about the address information stored when the user equipment registered according to the user equipment's ID to the user equipment.

The access gateway control function is configured for mapping a special operation in the calling process of a user equipment of the Public Switched Telephone Network or the Integrated Services Digital Network accessing through the access gateway function to a Session Initiation Protocol message.

The access gateway control function maps a hooking event to a Session Initiation Protocol message; and/or the access gateway control function supports the *# dialling scheme using the "KPML"; and/or the access gateway control function implements the secondary dialling service mapping using sending codes in a overlapping manner by the "KPML".

The access gateway control function further implements, as a proxy of a user of the Session Initiation Protocol, the enhanced control in a session of the Session Initiation Protocol, provides interworking and service sharing between a user equipment, a packet user equipment and a standard user equipment of the Internet Protocol Multimedia Subsystem accessing through the access gateway function.

The access gateway control function supports the related parameter mapping of the calling number displaying/calling number display restraining service between H.248/the Media Gateway Control Porotocol/H.233 and the Session Initiation Protocol; and/or supports the related parameter mapping of the connected number displaying/connected number display restraining service between H.248/the Media Gateway Control Protocol and the Session Initiation Protocol; and/or performs the related parameters mapping between H.248/the Media Gateway Control Porotocol/H.323 and the Session Initiation Protocol so as to implement distinguished rings requested by the IP virtual user switch service; and/or implements local processing, such as changing the media flow interaction direction and closing/opening the media sending channel after receiving a re-negotiation request, such as a media flow redirection request and a receiving/sending mode changing request, initiated by the peer through the "re-INVITE" denoting re-request, or the "UPDATE" denoting updating; and/or after receiving a notification of call keeping/restoring implemented by the peer through the "UPDATE" of the Session Initiation Protocol, closes/opens the local media sending channel in an interaction manner according to the session description protocol instruction and strategy deciding function in the notification; and/or after receiving the "REFER" instruction denoting forwarding from the peer, keeps the state of the local terminal, initiates a new connection according to the instruction, and switches the connection of the local terminal, releases the old connection according to subsequent instructions; and/or revises the target side while keeping the state of a local user, initiates a session creating request again, and plays a prompt voice for the local user as demanded by the service after receiving the redirection instruction of the Session Initiation Protocol.

The access gateway control function is further configured for supporting "Diameter" protocol, supporting resolving of contents of the Session Description Protocol of provided and replied in messages of the Session Initiation Protocol, supporting interaction with the Policy Decision Functions of an access domain and a Provider domain based on the "Diameter" protocol, and implementing a quality of service control process based on each session.

The access gateway control function is further configured for interacting, as a signalling proxy, with a media proxy through the Common Open Policy Service Protocol, and implementing the network address conversion between the control side and the user side during the interaction.

The access gateway control function is further configured for generating a charging request according to a request defined by the Internet Protocol Multimedia Subsystem standard and sending the message to the charging collecting function in the Internet Protocol Multimedia Subsystem.

Another embodiment of the present invention provides system for processing packet domain service signals, including an Internet Protocol Multimedia Subsystem,
at least one the packet user equipment acting as a terminal for processing packet service signals;
an access gateway control function for making as a proxy the user equipment access the call session control function in the Internet Protocol Multimedia Subsystem.

Protocols used by the packet user equipment include: H.248 protocol, the Media Gateway Control Protocol, and H.323 protocol.

The access gateway control function is further configured for managing access of a user equipment accessing directly in the Internet Protocol Multimedia Subsystem domain through a registration process in the Internet Protocol Multimedia Subsystem.

The access management of the access gateway control function further includes:
implementing the initial registration and logging out of an H.323 end point in the Internet Protocol Multimedia Subsystem domain when the H.323 end point registers and cancels registration, specifically, in the initial registration process, allocating a serving node in the Internet Protocol Multimedia Subsystem controlling the service processing of the user equipment, building the association between the serving node and the access gateway control function, and downloading the subscription data of the user from the serving node and/or the related Application Server, while in the de-registration process, cleaning out information of the serving node.

Preferably, in the initial registration process, the access gateway control function is further configured for cooperating with the call session control function and the Home Subscriber Server to implement the access authentication of the packet user equipment in the Internet Protocol Multimedia Subsystem system, and/or negotiating with the terminal for a security algorithm, and then protecting interactive messages using the negotiated security algorithm in the subsequent interaction process.

The access gateway control function implements the authentication of the packet user equipment by mapping the signalling process in a manner of authentication in the Internet Protocol Multimedia Subsystem and key negotiation.

An authentication algorithm supported by the packet user equipment is configured in the Home Subscriber Server according to the ability of the packet user equipment, and then the authentication of the packet user equipment is implemented using the configured authentication algorithm.

For the access gateway function that has not the ability of calculating an integrity protecting key and encrypting a key by itself, the Home Subscriber Server passes a authentication token carrying an integrity protecting key and an encrypted key to the access gateway function through the access gateway control function to implement the authentication and the key negotiation in the key negotiation.

The access management of the access gateway control function further includes:
the access gateway control function maintains, as an H.323 Gatekeeper, the valid registration state of an H.323 user equipment accessing directly in the Internet Protocol Multimedia Subsystem domain by mapping the state monitoring mechanism of H.323 and the periodical re-registration process in the Internet Protocol Multimedia Subsystem domain.

In the system, the access gateway control function is further configured for implementing a unified control of the calling processes of the packet user equipment accessing directly in the Internet Protocol Multimedia Subsystem.

The access gateway control function is further configured for mapping the basic calling processes and the session creating processes in the Internet Protocol Multimedia Subsystem domain of the packet user equipment accessing directly, and performing a bi-directional conversion between the Session Initiation Protocol of the Internet Protocol Multimedia Subsystem and various control protocols which are not of the Internet Protocol Multimedia Subsystem during the mapping process and after the session is built so as to achieve a unified calling control.

The access gateway control function inquires about the record stored when a calling user equipment registered according to the calling user equipment's ID, routes the session request of the user equipment to the serving node in the Internet Protocol Multimedia Subsystem allocated for the user, and the serving node triggers the Application Server service of the calling user equipment; routes the session request, which is from the serving node of the called user and pointed to the user equipment, to the user equipment by inquiring about the address information stored when the user equipment registered according to the identifier of the user equipment.

The access gateway control function further implements, as a proxy of a user of the Session Initiation Protocol, the enhanced control in a session of the Session Initiation Protocol, provides interworking and service sharing between the packet user equipment and a standard user equipment of the Internet Protocol Multimedia Subsystem.

The access gateway control function supports the related parameter mapping of the calling number displaying/calling number display restraining service between H.248/the Media Gateway Control Porotocol/H.233 and the Session Initiation Protocol; and/or supports the related parameter mapping of the connected number displaying/connected number display restraining service between H.248/the Media Gateway Control Protocol and the Session Initiation Protocol; and/or implements local processing, such as changing the media flow interaction direction and closing/opening the media sending channel after receiving a re-negotiation request, such as a media flow redirection request and a receiving/sending mode changing request, initiated by the peer through the "re-INVITE" denoting re-request, or the "UPDATE" denoting updating; and/or after receiving a notification of call keeping/restoring implemented by the peer through the "UPDATE" of the Session Initiation Protocol, closes/opens the local media sending channel in an interaction manner according to the session description protocol instruction and strategy deciding function in the notification; and/or after receiving the "REFER" instruction denoting forwarding from the peer, keeps the state of the local terminal, initiates a new connection according to the instruction, and switches the connection of the local terminal, releases the old connection according to subsequent instructions; or revising the target side while keeping the state of a local user, initiating a session creating request again, and playing a prompt voice for the local user as demanded by the service after receiving the redirection instruction of the Session Initiation Protocol, any combination of more than one of the above.

Preferably, the access gateway control function is further configured for supporting "Diameter" protocol, supporting resolving of contents of the Session Description Protocol of provided and replied in messages of the Session Initiation Protocol, supporting interaction between resource strategy deciding functions of an access domain and a Provider domain based on "Diameter" protocol, and implementing a quality of service control process based on each session.

Preferably, the access gateway control function is further configured for generating a charging request according to a request defined by the Internet Protocol Multimedia Subsystem standard and sending the message to the charging collecting function in the Internet Protocol Multimedia Subsystem.

Preferably, the access gateway control function is further configured for interacting, as a signalling proxy, with a media proxy through the Common Open Policy Service Protocol, and implementing the network address conversion between the control side and the user side during the interaction.

Another embodiment of the present invention provides a method for access to a system for processing packet domain service signals, including:
sending, by an access gateway function when starting up, a registration message to an access gateway control function;
responding to the registration message and acquiring by the access gateway control function the user ID corresponding to the access gateway function according to configuration data;
implementing the registration authentication of the identifier of the user in the Internet Protocol Multimedia Subsystem by the access gateway control function in cooperation with the call session control function and the Home Subscriber Server, implementing the negotiation with the access gateway function for a security algorithm, guaranteeing the access validity of the user accessing through the access gateway function via the authentication of the access validity of the access gateway function; and
protecting by the access gateway control function the interactive messages with the access gateway function using the negotiated security algorithm.

Preferably, the method further includes:
implementing by the access gateway control function registration and de-registration of the user equipment accessing through the access gateway function in the Internet Protocol Multimedia Subsystem domain through mapping the port state reporting process by the access gateway function and the re-registration process in the Internet Protocol Multimedia Subsystem domain, specifically, in the registration process, implementing allocation of the serving node in the Internet Protocol Multimedia Subsystem controlling service processing of the user equipment, building the association between the serving node and the access gateway control function, as well as downloading the subscription data of the user from the serving node and/or a related service server, and cleaning out information of the serving node in the de-registration process.

Preferably, the method further includes:
maintaining by the access gateway control function the valid registration state of the user equipment accessing the access gateway function in the Internet Protocol Multimedia Subsystem domain through mapping the port state reporting process, the port state auditing process of the access gateway function and the periodical re-registration process in the Internet Protocol Multimedia Subsystem domain.

Preferably, the method further includes:
making special identification in the user data of the user accessing through the access gateway function in a Home Subscriber Server in the Internet Protocol Multimedia Subsystem;
maintaining by the serving node and/or the related Application Server statically the registration state of the user and storing the user data according to the special identification in the downloaded user data before the user logs out on his own initiative.

Another embodiment of the present invention provides a method for access to a system for processing packet domain service signals, including:
sending by a packet user equipment a registration request including the user ID to the access gateway control function after accessing;
responding to the registration request and initiating by the access gateway control function a registration request of the Session Initiation Protocol to a call session control function according to configured information and the user ID;
performing the normal initial registration process in the Internet Protocol Multimedia Subsystem domain by the access gateway control function in cooperation with the Home Subscriber Server.

Preferably, the initial registration process includes:
allocating the service call session control function controlling the service processing of the packet user equipment;
building the association between the service call session control function and the access gateway control function;
downloading user subscription data from the service call session control function and/or a related service server.

Preferably, the method further includes:
negotiating by the access gateway control function with the packet user equipment for a security algorithm, and protecting subsequent interactive messages using the negotiated security algorithm.

Preferably, the packet user equipment is an H.323 device, and the method includes:
maintaining by the access gateway control function as an H.323 Gatekeeper the effectual registration state of an H.323 user accessing directly in the Internet Protocol Multimedia Subsystem domain using the mapping of the state monitoring mechanism of H.323 and the periodical re-registration process in the Internet Protocol Multimedia Subsystem domain.

Preferably, the state monitoring mechanism of H.323 may be one of the following manners:
a poll manner of periodically sending information request by the access gateway control function and a reporting manner of periodically reporting information report on its own initiative by the packet user equipment according to the instruction of the access gateway control function.

Preferably, the method further includes:
making special identification in the user data of the packet user in a Home Subscriber Server in the Internet Protocol Multimedia Subsystem;
maintaining by the service call session control function and/or the related Application Server in the imps statically the registration state of the user and storing the user data according to the special identification in the downloaded user data before the user logs out on his own initiative and storing the user data.

Another embodiment of the present invention provides a method of access to a system for processing packet domain service signals, including:
determining, by the access gateway control function based on statical configured information, the serving nodes for the user which include a serving call session control function and/or related application servers when the user equipment accesses the access gateway control function;
storing by the call session control function and/or related application server in the Internet Protocol Multimedia Subsystem statically in advance, or when receiving a session creating request from the user equipment and determining to download the user data, storing statically the user data before the user logs out, or when receiving a session creating request from the user equipment, determining to download the user data, deleting the data when a preset time is due, and downloading the user data again when receiving a session creating request from the user equipment.

Preferably, the service call session control function and/or the related Application Server in the Internet Protocol Multimedia Subsystem judge and store the user data statically according to a specified ID in a session creating request, or an information resource, or the public ID of the user equipment in the Internet Protocol Multimedia Subsystem domain, or determine to download the user data when receiving a session creating request.

Preferably, the method further includes:
subscribing by an Application Server needing to acquire the state information of the user in time to the call session control function;
sending by the access gateway control function an event notification to the Application Server according to the subscription information when the state of the user is changed.

The service control of the PSTN/ISDN includes control of a basic service, a supplementary service and an extended value-added service.

As can be seen from the above, in the embodiments of the present invention, the Access Gateway Control Function (AGCF) for shielding differences between access users is added on the basis of the IMS defined in the 3GPP R5/R6 standard; a PSTN user and an ISDN user first access an Access Gateway Function (AGF), then access the IMS through the agent function of the AGCF which is also configured for performing access management and control of the AGF. The AGCF makes, as a proxy, packet user equipments which are not in the IMS, such as an H.323/H.248/MGCP terminal, to access the IMS and performs the access management and control. Control of the PSTN/ISDN services may be implemented in the AGCF or implemented in a dedicated Application Server (AS) added to the IMS; or the control of the basic service and the supplementary service may be implemented in the AGCF while the control of the value-added service may be implemented in the AS.

Through adopting the technical solutions, the terminal which is not supported by the IMS previously, such as a PSTN/ISDN terminal and an H.323/H.248/MGCP terminal, can access the IMS, and the resources of the IMS may be used fully to provide the terminals with the services. Thus, the extended IMS becomes a general telecommunication service network allowing the access of various terminals.As can be seen from the embodiments above, new application services may be customized quickly for PSTN/ISDN users. The PSTN/ISDN services, as a network service ability of the IMS, can participate in fast combination of services or customization of new application services. All the services in the IMS are combination of multiple ASs, and each AS provides a basic network service ability or a specific value-added service, and all the ASs can perform combination of new application services by a service subscription rule as network sharing components; all the ASs can also be open through a third party application interface, by which new application services may be customized by a third party.

Seamless integration of the fixed network architecture and service with the mobile network architecture and service is achieved. Specifically, in the embodiments of the present invention, each of the network nodes defined in the 3GPP IMS standard need not be changed, and the existing IMS is used as the IMS defined by the mobile network, only adding a new network node, i.e. the AGCF, which enables a PSTN user and an ISDN user to access the IMS domain through the AGF, achieving the seamless integration of the fixed network with the mobile network. With the shielding function of the AGCF, the IMS need not distinguish the manner in which the user accesses the terminal, that is, the services provided by the IMS are the services independent of the networks, and a PSTN/ISDN Simulation AS can also provide service control to mobile users; the ASs customized for the mobile users can also serve the fixed users in the same way if the fixed terminals have the abilities, achieving the seamless integration of the fixed network with the mobile network in service provision.

Bran-new services may be provided to the PSTN user and the ISDN user. The IMS serves as a system providing IP multimedia services, and PSTN/ISDN Simulation AS can provide multiple value-added services and combine such services with other service abilities of the IMS network so as to provide bran-new services to an accessing PSTN user and ISDN user. With the cooperation of terminals, such as a Web Client, the services, such as network directory, instant message, Presence service, unified message service, click dialling, click transfer, click queue, click convention, intelligent routing, customized ring back tone, calling user coloured image, task customization and prompt, and self-help management. Especially, with the ubiquitous click control, service customization and self-help management, it is more convenient to use the PSTN/ISDN services, the Average Revenue Per Unit (ARPU) of a fixed network user may increase and new service grow points may be found.

The access via a Private Branch exchange (PBX) is supported, which facilitates construction of a cross-domain enterprise network. A PBX user may enjoy the same services as other users accessing through the AGF. The cross-domain enterprise network can be constructed between multiple PBXs and the PBX users may enjoy a wide area IP Centrex service. Because such functions are the existing functions in the IMS, the access of the terminal to the IMS allows convenient provision of the functions for the terminal accessing newly.

Besides the advantages above, such as achieving seamless integration of the fixed network with the mobile network in terms of the IMS, because the improvement on the basis of the IMS, the technical solutions also have the following characteristics.

The implementation of services is independent of the network, thus deploying and extending the services quickly and achieving a low cost of customizing the services. In the embodiments of the present invention, the PSTN/ISDN services are all implemented by the PSTN/ISDN Simulation AS, or part of the services are implemented by the PSTN/ISDN Simulation AS and others are implemented by the AGCF. Specifically, the S-CSCF provides the session control function independent of all the services, and the session control function and the service control function are implemented by different network nodes. The newly added network node, i.e. the AGCF, shields difference between a PSTN user and an ISDN user accessing through the AGF, and a unified session control interface of the SIP is provided to the IMS.

Conflicts between multiple services are effectively avoided, and problems, such as multiple triggering of a service, providing a service by multiple points, nesting dialling of a service, are resolved. All the services in the IMS are triggered by the S-CSCF through the user service subscription data, and conflicts between triggering of the PSTN/ISDN services and triggering of other services, such as the intelligent service, may be effectively avoided by setting an appropriate trigger rule. The PSTN/ISDN services are uniformly implemented by one network node, that is, the AS, and the AS can coordinate various PSTN/ISDN services properly and arbitrate when the conflicts between services occur.

The user subscription data are uniformly managed by the HSS and all the services of the users are uniformly provided by the AS in a centralized manner, which makes it convenient for the operator to promote services of a unified brand.

The nomadism characteristic and service mobility of the fixed network user are supported. Because the user subscription data are collected and managed in the HSS of the IMS and the terminal port of a user at the access point is separated from the public ID of the user, the nomadism characteristic of the fixed network user is supported. The user always acquires the services in the home domain to which the user has subscribed, and the user may always be routed through different access points to the home domain to which the user has subscribed when the terminal moves. Thereby, the services acquired are completely the same as the previous services.

The wide area service is implemented easily, and plenty of cross-domain IP Centrex services may attract more enterprise clients. Because all the user data of the PSTN/ISDN services are collected and managed in HSSs in the IMS and the location between the multiple HSSs may be determined using the SLF in the IMS, thus the wide area service may be implemented easily.

The enterprise services and group services may be customized quickly and conveniently. In the IMS, the PSTN/ISDN Simulation AS may exist as multiple physical entities, and a separate AS of the enterprise services and group services may be customized for the users with a special demand. Thereby, customized services with individualized characteristics may be provided quickly and conveniently without impact on other services and users.

### Brief Description of the Drawings

Fig. 1 shows a schematic diagram illustrating the network architecture of the IMS in the 3GPP R5/R6 standard.
Fig.2 shows a schematic diagram illustrating the network architecture of a system for processing a packet domain service signal in accordance with an embodiment of the present invention.
Fig.3 shows a schematic flowchart of an outgoing call from a user accessing through an AGF in the method for processing a packet domain service signal in accordance with an embodiment of the present invention.
Fig. 4 shows a schematic flowchart of an incoming call to a user accessing through an AGF in the method for processing a packet domain service signal in accordance with an embodiment of the present invention.
Fig.5 shows a schematic flowchart of an outgoing call from a user accessing through an AGF in the method for processing a packet domain service signal in accordance with another embodiment of the present invention.
Fig.6 shows a schematic flowchart of an incoming call to a user accessing through an AGF in the method for processing a packet domain service signal in accordance with another embodiment of the present invention.
Fig.7 shows a schematic flow chart of the registration, access authentication and security algorithm negotiation of a user accessing through an AGF in the IMS domain in the method for processing packet domain service signals in accordance with a preferred embodiment of the present invention.
Fig.8 shows a schematic flow chart of the registration, access authentication and security algorithm negotiation of a non-SIP user accessing directly in the IMS domain in the method for processing packet domain service signals in accordance with a preferred embodiment of the present invention.
Fig.9 shows a schematic flow chart of the registration of a user accessing through an AGF in the IMS domain in the method for processing packet domain service signals in accordance with a preferred embodiment of the present invention.
Fig. 10 shows a schematic flow chart for maintaining a valid registration state of a user accessing through an AGF in the IMS domain in the method for processing packet domain service signals in accordance with a preferred embodiment of the present invention.

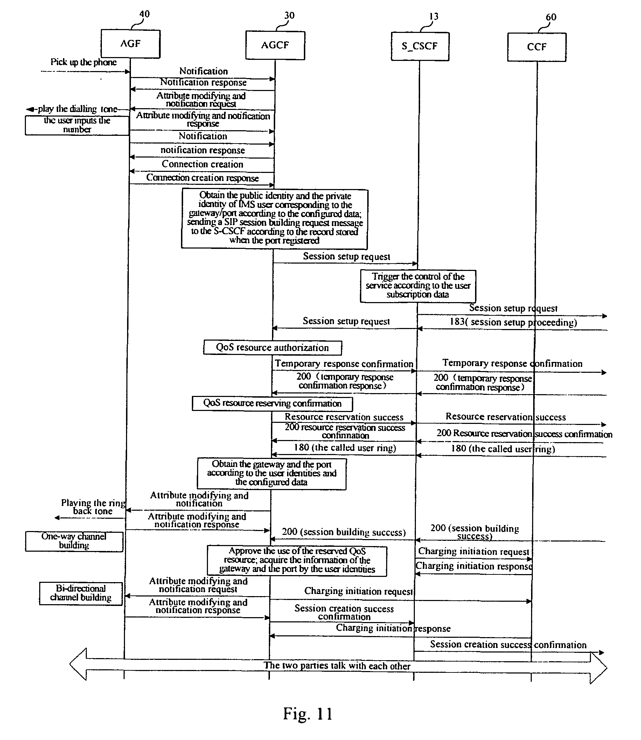

Fig. 11 shows a schematic flow chart of the initiation of a call by a user accessing through an AGF in the IMS domain in the method for processing packet domain service signals in accordance with a preferred embodiment of the present invention.
Fig. 12 shows a schematic flow chart of the initiation of a call by a non-SIP (H.323) terminal user in the IMS domain in the method for processing packet domain service signals in accordance with a preferred embodiment of the present invention.

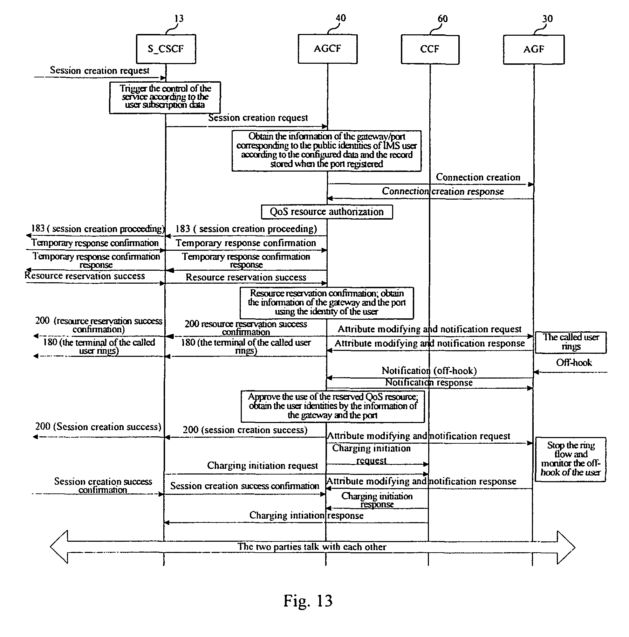

Fig. 13 shows a schematic flow chart of the termination of a call by a user accessing through an AGF in the IMS domain in the method for processing packet domain service signals in accordance with a preferred embodiment of the present invention.
Fig. 14 shows a schematic flow chart of the termination of a call by a non-SIP (H.323) terminal user in the IMS domain in the method for processing packet domain service signals in accordance with a preferred embodiment of the present invention.
Fig. 15 shows a schematic diagram illustrating the network architecture of the system for processing packet domain service signals in accordance with another preferred embodiment of the present invention.

### Embodiments of the Invention

In order to make the objects, technical solutions and advantages of the present invention more apparent, the present invention is hereinafter described in detail in conjunction with the drawings.

In an embodiment of the present invention, a new network node, that is, an AGCF, is introduced to the IMS defined in the 3GPP R5/R6 standard. Through managing an access device, a PSTN user, an ISDN user and an H.323/H.248/MGCP terminal are able to access an IMS domain, and services are provided to the PSTN user and the ISDN user. Furthermore, functions of each network node in the IMS defined in the 3GPP standard remain unchanged, and an accessing user may be regarded as a user in the IMS domain, such as a 3G mobile user because the AGCF shields differences between accessing users. The PSTN/ISDN services may be implemented by the AGCF, or be managed by a PSTN/ISDN Simulation Application Server (AS), i.e. a first application server, in the IMS in a centralized manner; or a basic service and a supplementary service are managed by the AGCF while an extended value-added service is managed by the PSTN/ISDN Simulation AS.

It should be noted that although all the following embodiments take an H.323 terminal as an example in describing for convenience, those skilled in the art can appreciate that, with reference to the related processing of users accessing through an AGF using the H.248/MGCP as an 12 interface control protocol, technical solution of the present invention can also be applied to other non-SIP packet terminals without any inventive process.

The network architecture and the principle of the system for processing the packet domain service signal is hereinafter described in detail with reference to Fig.2.

In an embodiment of the present invention, the system for processing the packet domain service signal includes IMS 10, PSTN/ISDN Simulation AS 20, AGCF 30, AGF 40, Access Network (AN) 51, PSTN User Equipment (UE) 52, ISDN UE 53, and Private Branch exchange (PBX) 54, H.323 Terminal 61, and H.248/MGCP Terminal 62. In the embodiments of the present invention, PSTN UE 52, ISDN UE 53 and PBX 54 are uniformly referred to as UE 50, and H.323 Terminal 61 and H.248/MGCP Terminal 62 are uniformly referred to as Packet UE.

The connection relations of sub-systems in the system for processing the packet domain service signal are described below. PSTN/ISDN Simulation AS 20 is connected with the Home Subscriber Server (HSS) in IMS 10 through the Sh interface, connected with the Subscription Locator Function (SLF) in IMS 10 through the Dh interface, and connected with the Call Session Control Function (CSCF), which is a Serving CSCF (S-CSCF), in IMS 10 through the IP multimedia Service Control (ISC) interface. AGCF 30 is connected with the CSCF, which may include an S-CSCF and an Interrogating-CSCF (I-CSCF), in IMS 10 through the I1 interface, and connected with AGF 40 through the 12 interface. Furthermore, AGF 40 is connected with AN 51 through the V5 interface, connected with PSTN UE 52 through the Z interface, connected with ISDN UE 53 through the Basic Rate Interface (BRI), and connected with PBX 54 through the Foreign Exchange Office (FXO) interface/Primary Rate Interface (PRI)/E1 interface.

Functions of the sub-systems are hereinafter described in detail.

IMS 10 is an IMS defined in the 3GPP R5/R6 standard, in which network entities and related interfaces are completely the same as those defined in the 3GPP IMS standard. Refer to the published "3GPP TS 23.002" for detailed information.

Several network entities in the IMS which are relatively related to the embodiment of the present invention are hereinafter described in brief.

The S-CSCF is configured for implementing the session control function of the Session Initiation Protocol (SIP) of users accessing through the AGF (the PSTN user and the ISDN user accessing through AGF 40) and packet users accessing directly.

The HSS is configured for providing the storing and managing function of the user subscription data of the users accessing through the AGF and the packet users accessing directly, and the storing and managing function of the PSTN/ISDN service related data of the users accessing through the AGF and the packet users accessing directly.

The SLF is configured for providing the subscription locating function of the users accessing through the AGF and the packet users accessing directly.

Although the network entities above serve the users accessing through the AGF and the packet users accessing directly, those skilled in the art may appreciate that no modification to the network entities is needed in fact, and the users accessing through the AGF and the packet users accessing directly may be regarded and processed as common users in the IMS domain (e.g. the 3G mobile users) because AGCF 30 shields differences between the users accessing the IMS.

PSTN/ISDN Simulation AS 20 is configured for providing the PSTN/ISDN service control for the users accessing through the AGF, the packet users accessing directly and other standard IMS users. An AS is a standard network entity in the IMS, and the difference between PSTN/ISDN Simulation AS 20 and the other AS is that PSTN/ISDN Simulation AS 20 is dedicated to providing the PSTN/ISDN service control while the other AS in the IMS may not provide the PSTN/ISDN service control. The interfaces between PSTN/ISDN Simulation AS 20 and each network entity in IMS 10 are standard interfaces.

PSTN/ISDN Simulation AS 20 may be applied in two methods.

In an embodiment of the present invention, PSTN/ISDN Simulation AS 20 provides all the PSTN/ISDN service control. The advantage of this method is that call control is completely separated from service control, and the PSTN/ISDN services function as a network service ability provided by the AS in the IMS. In this method, all the user subscription data and service related data of the users are stored in the HSS in IMS 10.

In another embodiment of the present invention, AGCF 30 implements the control of the basic service and the supplementary service while PSTN/ISDN Simulation AS 20 implements the control of the extended value-added service. The advantage of this method is that, compared with the former method, the PSTN/ISDN services may be implemented faster. The SIP was not designed to implement the PSTN/ISDN services initially, in order to implement the basic service and supplementary service by PSTN/ISDN Simulation AS 20, AGCF 30 needs to implement mapping between part of the user interface signalling and the SIP or to encapsulate part of the user interface signalling into the SIP, and the usage of the SIP may further be extended, such as mapping a hooking event (the key of R is pressed) in the user interface signalling, mapping the dialling scheme including *# type using the KPML, mapping the dialling scheme of a second dialling tone by the KPML, mapping the pulse charging event and antipolar charging event using the message of SIP from the PSTN/ISDN Simulation AS. In the latter method, the subscription data and service data related to the basic services and supplementary services of the PSTN/ISDN are stored in AGCF 30, other subscription data and service data are stored in the HSS in IMS 10. In this method, unless an outgoing call of the user is terminated by AGCF 30 owing to the service control, all the calls of the user still have to pass IMS 10 in which the S-CSCF implements connection control and routing. Services related to the hooking events include but are not limited to Call Transfer, Malicious Call Trace, 3-Party Service, and Call Waiting. For example, for the Call Transfer, when receiving the notification message reporting a hooking event, the AGCF 30 notifies, using an SIP forwarding (REFER) message, the AS providing basic services and supplementary services for the user to play a prompting tone to the peer, instructs the AGF 40 to play the voice and collect the numbers, and notifies the AS to perform the processing of the Call Transfer using the REFER after all the transfer numbers have been collected.

In actual applications, the latter method may be applied as a transition method before existing networks can implement the service control according to the former method.

AGCF 30, as a key device of the embodiments of the present invention, is a network entity newly added for providing the access control function of AGF 40 and shielding the differences from the users accessing through the AGF and packet users accessing directly to common users in the IMS domain, which may meet the demand that the session control function and the service control function in the IMS core network be independent of the accessing users. AGCF may be regarded as another kind of node of a visited domain in the IMS, providing an access agent function to the users accessing through AGF.

AGCF 30 includes the following functions.

Function 1: access management and control function of AGF 40.

Signalling protocols in the 12 interface between AGCF 30 and AGF 40 may include but are not limited to the H.248 protocol, the Media Gateway Control Protocol (MGCP), the SIP, the ISDN Q.921 User Adaptation Layer/V5.2-User Adaptation Layer over Signaling Transport (IUA/V5UA over SIGTRAN) protocol.

AGCF 30 may manage and control one or more AGFs 40 and only one AGF 40 is shown in Fig.2 for the convenience of description. Each of AGFs 40 has a unique ID in AGCF 30. Those skilled in the art may appreciate that the access management and control function of AGF 40 by AGCF 30 may be implemented with reference to the management and control function of the Media Gateway (MG) by the Media Gateway Controller (MGC) in the related art.

AGCF 30 implements the registration/authentication of AGF 40, as well as the function of mapping bi-directionally between the registration/authentication of AGF 40 and the registration/authentication process defined in the IMS domain. Those skilled in the art may appreciate that such registration/authentication mechanism may be implemented with reference to the registration/authentication mechanism of a user signalling layer of the terminal by the cooperation of the Proxy-CSCF (P-CSCF), the S-CSCF and the HSS. In a preferred embodiment of the present invention, when implementing the registration/authentication, AGCF 30 also negotiates with AGF 40 on a security algorithm, and protects interactive messages using the security algorithm negotiated in a subsequent interaction process. Those skilled in the art can understand that the access authentication can be mapped through the signalling process of AGCF 30 in an IMS-Authentication and Key Agreement (IMS-AKA) manner; or a special authentication algorithm can be configured in the HSS based on a user according to the ability of AGF 40; for AGF 40 that has not the ability of calculating an integrity protecting key/encrypting key (IK/CK) by itself, HSS 13 can pass an authentication token (AUTN) carrying the IK/CK to the AGF 40 through AGCF 30. The security algorithm can include but is not limited to the manner of the Internet Protocol Security (IPSec).

Function 2: access agent function for the PSTN user and the ISDN user.

AGCF 30 in the visited location provides the access agent function for the PSTN user and the ISDN user that access through AGF 40, and shields the access differences between the PSTN user and the ISDN user, which meets the demand that the session control function and the service control function of the IMS core network are independent of the accessing users. Therefore, no modification to the functions of the network nodes in the IMS defined by the 3GPP standard is needed. Those skilled in the art may appreciate that the access agent function may be implemented with reference to the related functions of the P-CSCF.

The interface between AGCF 30 and the S-CSCF or the I-CSCF in IMS 10 is the I1 interface, the reference point of which is based on the SIP. The reference point of I1 interface may be based on the SIP-I in some cases, e.g. when information of the ISDN supplementary service needs to be carried.

AGCF 30 implements mapping between the signalling processes of an 12 interface protocol and an I1 interface protocol. In the case that the signalling protocol of the 12 interface is the SIP, AGCF 30 need not perform the mapping between the 12 interface protocol and the I1 interface protocol, but certain modification to contents of the I2 interface protocol or the I1 interface protocol may be needed.

AGCF 30 should configure a Private User Identity and a Public User Identity which are needed for accessing the IMS domain for the PSTN user and the ISDN user accessing through AGF 40.

When an outgoing call from a user accessing through AGF 40 reaches AGCF 30, AGCF 30 may acquire the Private User Identity and the Public User Identity corresponding to the user according to, but not limited to, an identity of AGF 40 and an identity of a user port.

When an incoming call to a user accessing through AGF 40 reaches AGCF 30, AGCF 30 may locate, according to, but not limited to, the Private User Identity and the Public User Identity of the called user, the user port of the user and AGF 40 through which the user accesses the IMS.

AGCF 30 also implements the registration and the maintenance of the registration validity state of a user accessing through AGF 40 in the IMS domain by mapping the port state reporting process and the port state auditing process of AGF 40, and the periodical registration process in the IMS domain. Those skilled in the art can understand that, in practice, AGCF 30 can implement the registration/de-registration of the corresponding user identity when AGF 40 reports that the state of a port is normal/abnormal; the registration process above is represented as re-registration in the IMS standard manner without access authentication because the users accessing through AGF 40 share the private identity of AGF 40. Upon implementing the registration of the user in the IMS domain through the processes above, AGCF 30 may record related address information, including information of the access address and the access port of the user, information of the address of the serving node in the IMS domain allocated for the user. In a preferred embodiment of the present invention, for the maintenance of the registration validity state of the user in the IMS domain, AGCF 30 may store the period of validity determined through negotiation in the registering process of the user and monitor the period of validity before the user de-registers. AGF 40 initiates the port auditing process when the period of validity is due and performs the periodical re-registration in the IMS domain according to an auditing result. To avoid frequent interaction with AGF 40, AGCF 30 may directly perform the periodical re-registration in the IMS domain according to the port state stored in the local when the period of validity is due. It should be noted that AGCF 30 needs to store in the local the port state reported by AGF 40 to implement the above mechanism.

It should also be noted that, for further reducing the traffic load of AGCF 30, AGCF 30 may not monitor the period of validity and not perform the periodical re-registration in the case that the change of the port state is not reported. The validity state need not be maintained by the periodical registration since the S-CSCF and/or the related Application Server in the IMS make special identification in downloaded data, or perform data aging according to a unified processing period in the IMS and download the data again in the next processing of the service.

It should be noted that the registration process of AGF 40 in the IMS domain may be omitted completely to simplify the processing of AGCF 30, and in this case, corresponding alteration needs to be made to related processing of AGCF 30 and the previous network entities in the IMS because the user data can not be downloaded and the serving node in the IMS domain can not be flexibly allocated during the registering process. In a preferred embodiment of the present invention, AGCF 30 and the HSS configures statically information of the serving node of the user instead of recording information of the serving node allocated by the network in the registration process, and according to the manner of the data configuration. AGCF 30 can associate identities of the PSTN users and the ISDN users accessing through AGF 40 with the S-CSCF so as to acquire an address of the home S-CSCF of each user. According to the manner of the data configuration, AGCF 30 can also acquire an address of the I-CSCF first, and the I-CSCF chooses an S-CSCF in a certain manner as the home S-CSCF of each user. The S-CSCF and the related AS store the user data statically, or determine to download the user data when receiving a session creating request, and can determine the special processing of downloading the user data according to the specific identity in the session creating request, or the information source, or the Public User Identity in the IMS domain. For maintaining the data, the validity state of the data need not be maintained by the periodical registration since special identification may be made in the S-CSCF and/or the related AS, or data aging may be conducted according to a unified processing period in the IMS and download of the data may be conducted again in next processing of the service. In addition, it should be noted that, in view of the demand that the corresponding AS should acquire in time the user state in some services in the IMS, the corresponding AS subscribes to corresponding AGCF 30 and the corresponding AGCF 30 sends an event notification (Notify) to the corresponding AS according to subscription information of the corresponding AS if the AGCF 30 knows that the user state has changed upon receiving a report about the change of the port state.

### Function 3: access proxy function for packet terminals

Besides being able to be accessed by the PSTN/ISDN user terminals through AGF 40, AGCF 30 may also be accessed directly by a packet user terminal of non-IMS access control protocol, such as H.323 terminal 61 and H.248/MGCP terminal 62 in Fig.2. The IMS access control protocol includes the SIP, the SIP-I (i.e. SIP encapsulating information of the ISDN User Part (ISUP)). The non-IMS access control protocol includes but is not limited to H.248, Media Gateway Control Protocol (MGCP) and H.323.

The functions of AGCF 30 for H.323 terminal 61 and H.248/MGCP terminal 62 are mainly mapping, as a proxy, the massage of H.323/H.248/MGCP and the SIP between the CSCF, and H.323 terminal 61 and H.248/MGCP terminal 62, as well as access management and call control. Taking the processing of H.323 terminal 61 as an example, the related functions of AGCF 30 are described below.

AGCF 30 implements the initial registration and de-registration of H.323 terminal 61 in the IMS domain when H.323 terminal 61 registers and removes registration; in the initial registration process, AGCF 30 allocates a node in the IMS (the S-CSCF) controlling the service processing of the user, creates the association between the node and AGCF 30, and downloads the subscription data of the user from the node and/or a related service server; and, in the de-registration process, AGCF 30 removes the information of the node;

In the initial registration process above, AGCF 30 implements conversion of protocol messages related to the access authentication, negotiates a security algorithm with the packet terminal at the same time, and protects the interactive messages in the subsequent interaction process using the security algorithm negotiated;

AGCF 30 implements, as an H.323 Gatekeeper, the maintenance of the registration validity state of an H.323 user accessing directly in the IMS domain by mapping an original state monitoring mechanism of H.323 and the periodical re-registration process in the IMS domain; the state monitoring mechanism includes a polling manner of periodically sending Information Request (IRQ) by AGCF 30 and a reporting manner of periodically reporting Information Report (IRR) initiatively by the end point according to the instruction of AGCF 30.

In order to reduce the service load of AGCF 30, AGCF 30 may not monitor the period of validity of registration, and may not perform the periodical re-registration in the case that the change of the port state is not reported by the packet terminal. The validity state of downloaded data is not maintained through periodical registration as the S-CSCF and/or the related Application Server makes the special identification in the downloaded data or performs data aging in a unified processing period in the IMS and downloads the data again in the next processing of the service.

In an embodiment of the present invention, AGCF 30 also maps the signalling processes of requesting removal of registration by H.323 terminal 61 to the de-registration process in the IMS domain.

### Function 4: performing bi-directional conversion between the SIP of the IMS and various control protocols of non-IMS so as to achieve unified call control.

AGCF 30 is also configured for mapping the session creating process in the IMS domain to the basic call process of the PSTN/ISDN users accessing through AGF 40 and/or the packet users accessing directly, and performing the bi-directional conversion between the SIP of the IMS and various control protocols of non-IMS during the process of mapping above, the unified call control is achieved.

In this process, AGCF 30 inquires about the record of the calling UE stored when the calling UE registers according to the identity of the calling UE, routes the session request of the calling UE to the S-CSCF allocated for the calling user which triggers the service of the calling user; routes to the calling UE a session request which is from the S-CSCF of the called user to the calling UE by inquiring about the address information stored when the calling UE registers according to the identity of the calling UE.

In the case that the control of all the PSTN/ISDN services is provided by PSTN/ISDN Simulation AS 20, AGCF 30 also maps special operation in a call process of a PSTN/ISDN user accessing through AGF 40 to an SIP message so as to support the implementation of the original special services of the PSTN/ISDN user in the IMS.

Moreover, in order to implement interworking and service sharing between a PSTN/ISDN user accessing through AGF 40, a packet user accessing directly and a standard user of the IMS, AGCF 30 also implements, as a user proxy of the SIP, enhanced control in a session of the SIP. For example, regarding a service request of the enhanced control in a session which is initiated by a peer user or network to a local user, such as re-INVITE, UPDATE request, REFER instruction, and re-direction instruction, AGCF 30 instead of the local user terminal performs the corresponding control processing and implements the mapping of related service parameters between different control protocols.Function 5: control of Quality of Service (QoS) based on each session and the Network Address Translation (NAT).

AGCF 30 also provides the QoS control based on each session and the Network Address Translation (NAT) control mechanism, which are similar to those of the P-CSCF. To provide the control of QoS based on each session, AGCF 30 supports the Diameter protocol, the parsing of the Session Description Protocol (SDP) of offer/answer in a message of the SIP, and the interaction with the Policy Decision Function (PDF) through a Gq-similar interface based on the Diameter protocol. To implement the NAT as a signalling proxy, AGCF 30 supports the COPS protocol and the interaction with a media proxy through the COPS protocol, and cooperates with the media proxy to implement the NAT processing between the control side and the user side in the service processing process.

### Function 6: control of the basic service and the supplementary service of the PSTN/ISDN.

AGCF 30 can also provide the control of the basic service and the supplementary service of the PSTN/ISDN for the PSTN user and the ISDN user accessing through AGF 40, and the service related data needed by the control are stored in AGCF 30.

### Function 7: charging function

During the calling processes of the PSTN user, the ISDN user accessing through AGF 40 and a packet user accessing directly, AGCF 30 may generate a charging request according to the requirement defined in the IMS standard and send charging information to the Charging Collection Function (CCF) in IMS 10.

AGF 40 is an access device located between a circuit domain and a packet domain, providing an access function enabling the PSTN user and the ISDN user to access the AGCF 30, and implementing the conversion function between a narrowband voice in the circuit domain and anIP media flow in the packet domain.

At the same time, AGF 40 implements the conversion function between the user interface signalling in the circuit domain and the call control signalling in the packet domain, and the call control signalling in the packet domain is transferred by the 12 interface between AGF 40 and AGCF 30. The signalling protocols over the 12 interface may include but are not limited to the H.248 protocol, the MGCP protocol, the SIP, and the IUA/V5UA over SIGTRAN protocol.

AGF 40 may be, but not limited to, an access device of AG, or an access device of IAD.

AN 51 is an access network, connected with AGF 40 through a V5 interface. A user in the access network may be a PSTN user and an ISDN user. The V5 interface provides V5 digital access signalling.

PSTN UE 52 is a PSTN terminal, connected with AGF 40 through a Z interface which provides analog user signalling.

ISDN UE 53 is an ISDN terminal, connected with AGF 40 through a BRI interface which provides ISDN digital user signalling.

PBX 54 is a Private Branch exchange, connected with AGF 40 through an FXO interface, a PRI interface, an E 1 interface or the like. A PBX 54 user may be a PSTN user or an ISDN user. The FXO interface provides the loop trunk signaling, the PRI interface provides the ISDN digital user signaling, and the E1interface provides the digital trunk signaling.Those skilled in the art may appreciate that AN 51, PSTN UE 52, ISDN UE 53, PBX 54, H.323 terminal 61 and H.248/MGCP terminal 62 are devices in the related art, and are applied in the embodiments of the present invention without improvement of the devices.

To sum up, compare Fig. 1 with Fig.2, it can be seen that AGCF 30 is added in the embodiments of the present invention, and the PSTN user or the ISDN user using AN 51, PSTN UE 52, ISDN UE 53 or PBX 54 is able to access the IMS through AGCF 30 and AGF 40 managed by AGCF 30, and the packet terminal, such as H.323 terminal 61, H.248/MGCP terminal 62, is able to access directly through AGCF 30. In addition, PSTN/ISDN Simulation AS 20 managing the PSTN/ISDN services is also added. The PSTN/ISDN services are implemented using the architecture shown in Fig.2 in the embodiments of the present invention.

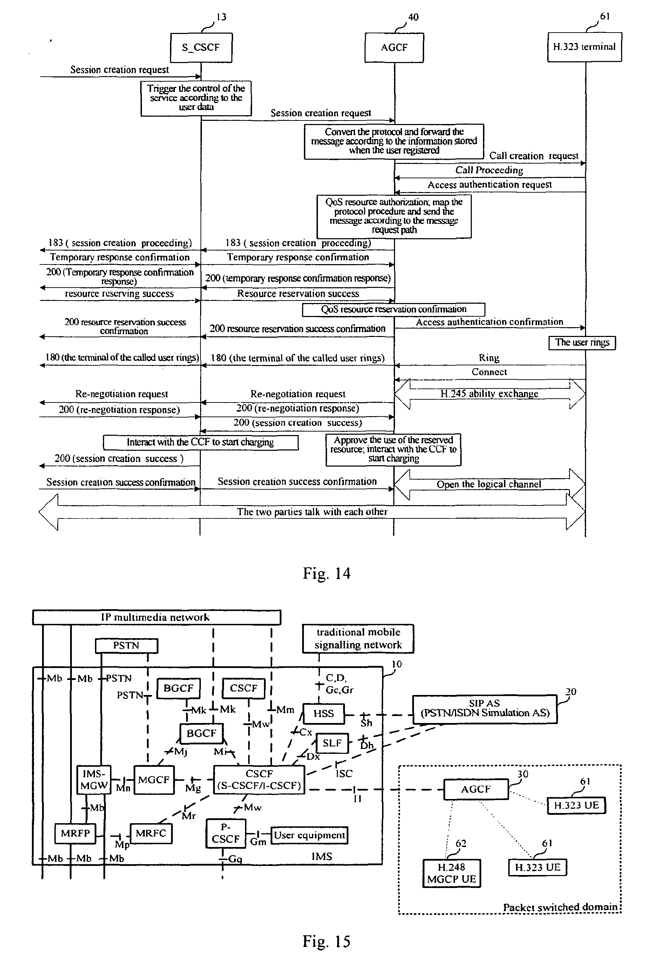

There may be some variations for the architecture in Fig.2. For example, AGCF 30 may not access the packet terminal, e.g. H.323 terminal 61 and/or H.248/MGCP terminal 62, but only access several AGFs 40. For another example, as shown in Fig. 15, AGCF 30 only accesses several packet terminals, such as H.323 terminal 61 and/or H.248/MGCP terminal 62and does not access AGF 40. Those skilled in the art can understand that the functions of AGCF 30 in the two examples above are a subset of the functions of AGCF 30 in Fig.2, and may be determined as the functions related to AGF 40 or the functions related to H.323 terminal 61 and H.248/MGCP terminal 62, respectively, which will not be described herein.

It should be noted that the core of the method for the processing packet domain service signal in accordance with the embodiments of the present invention is the port/identity conversion and protocol conversion which are implemented by AGCF 30, and there may be multiple implementing manners for the method according to specific conditions (for example, it is needed to make full use of existing devices in some cases). The detailed process of the method for processing the packet domain service signal in accordance with two embodiments of the present invention is hereinafter described.

In an embodiment, PSTN/ISDN Simulation AS 20 provides control of all the services, including the basic service, the supplementary service and the extended value-added service of the PSTN/ISDN, for the PSTN user and the ISDN user accessing through AGF 40.

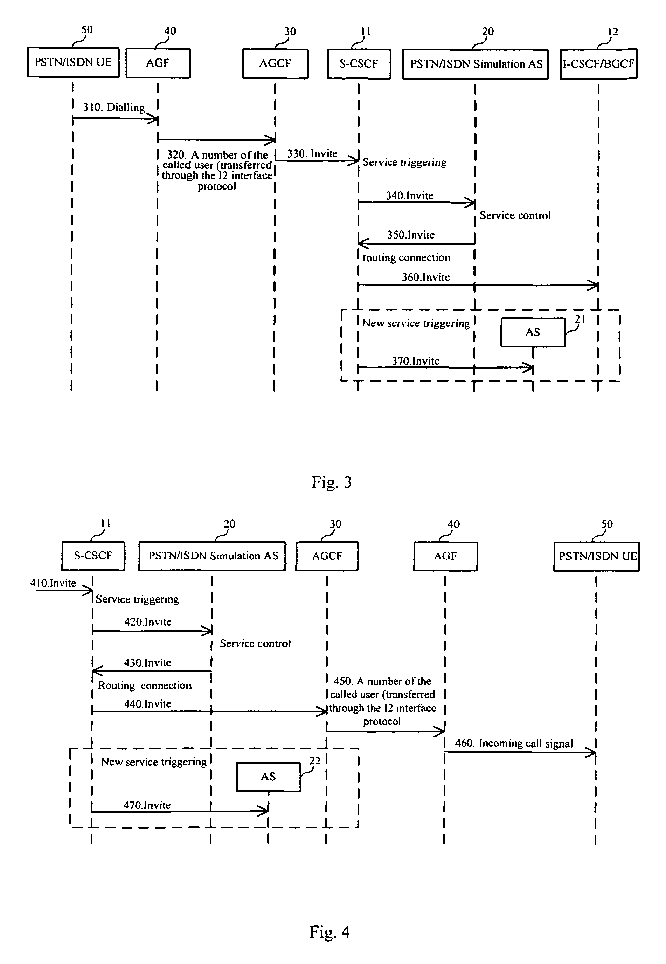

The calling process of an outgoing call from a user accessing through the AGF is shown in Fig.3.

In Step 310, the user hooks off and dials through PSTN/ISDN UE 50. For the convenience of description, PSTN/ISDN UE 50 represents various user equipments of the PSTN/ISDN services, including all the related user equipments of AN 51, PSTN UE 52, ISDN UE 53 and PBX 54.

In Step 320, AGF 40 sends the called number to AGCF 30 through the 12 interface protocol upon receiving the dialling signal from PSTN/ISDN UE 50.

In Step 330, AGCF 30 acquires the Private User Identity and the Public User Identity corresponding to the user according to the identity of AGF 40 and the identity of the user port, maps the 12 interface protocol to the SIP, and sends an INVITE message to S-CSCF 11. Those skilled in the art may appreciate that the INVITE message is an SIP request message defined in the SIP. S-CSCF 11 is a network entity in IMS 10.

In Step 340, S-CSCF 11 triggers the service according to the user subscription information and sends the INVITE message to PSTN/ISDN Simulation AS 20. The user subscription information may be acquired from the HSS in IMS 10.

In Step 350, PSTN/ISDN Simulation AS 20 sends the INVITE message to S-CSCF 11 upon performing corresponding control of the PSTN/ISDN services.

In Step 360, S-CSCF 11 keeps the session control and determines whether to trigger a new service subsequently or to implement the connection control and the routing. If S-CSCF 11 determines according to the user subscription data that a new service needs to be triggered in another AS, perform Step 370; otherwise, S-CSCF 11 implements the connection control and the routing, specifically, sends the INVITE message to the I-CSCF of the home domain of the called user if the called user is in the IMS domain, for example, the called user is also a user accessing through AGF 40, and sends the INVITE message to the Breakout Gateway Control Function (BGCF) if the called user is outside the IMS domain.

In Step 370, when S-CSCF 11 determines according to the user subscription data that a new service needs to be triggered in another AS, S-CSCF 11 triggers the new service and sends an INVITE message to AS 21 corresponding to the new service.

The calling process of an incoming call to a user accessing through the AGF is shown in Fig.4.

In Step 410, S-CSCF 11 in the home domain of the called user triggers the service according to the user subscription information upon receiving the INVITE message. The user subscription information may be acquired from the HSS in IMS 10.

In Step 420, S-CSCF 11 sends the INVITE message to PSTN/ISDN Simulation AS 20.

In Step 430, PSTN/ISDN Simulation AS 20 sends the INVITE message to S-CSCF 11 upon performing appropriate service control.

In Step 440, S-CSCF keeps the session control and determines whether to trigger a new service subsequently or to implement the connection control and the routing. If S-CSCF 11 determines according to the user subscription data that a new service needs to be triggered in another AS, perform Step 470; otherwise, S-CSCF 11 implements the connection control and the routing, specifically, sends the INVITE message to AGCF 30 and performs Step 450 if the called user is a user accessing through AGF 40.

In Step 450, AGCF 30 locate AGF 40 accessed by the user and the user port according to the Public User Identity of the called user and the information stored when the user registers, maps the SIP to the 12 interface protocol, and transfers the called number to AGF 40 through the 12 interface protocol.

In Step 460, AGF 40 sends an incoming call signal to PSTN/ISDN UE 50.

In Step 470, S-CSCF 11 triggers a new service and sends the INVITE message to AS 22 corresponding to the new service.

In an embodiment, AGCF 30 provides the control of the basic service and the supplementary service for a user accessing through AGF 40 while PSTN/ISDN Simulation AS 20 provides the control of the extended value-added service.

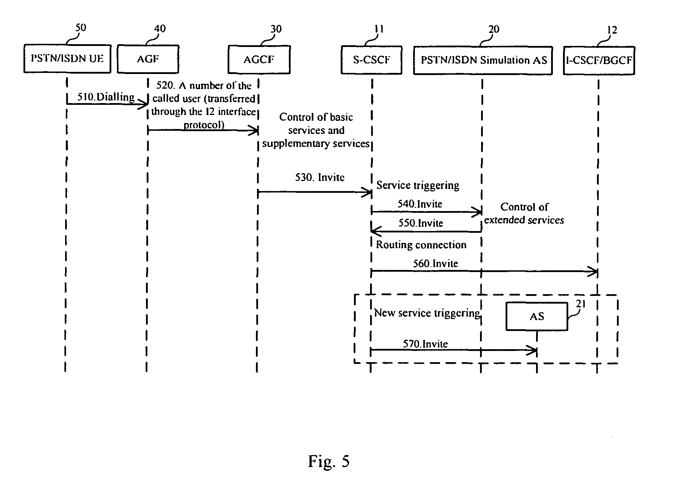

The calling process of an outgoing call from a user accessing through AGF 40 is shown in Fig. 5.

In Step 510, the user hooks off and dials through PSTN/ISDN UE 50.

In Step 520, AGF 40 sends the called number to AGCF 30 through the I2 interface protocol upon receiving the dialling signal from PSTN/ISDN UE 50.

In Step 530, AGCF 30 controls the basic service and supplementary service of the PSTN/ISDN first. The basic service and the supplementary service of the PSTN/ISDN mentioned herein include such services as abbreviated dialling and registration of a new service. When the processing of the services is completed, AGCF 30 terminates the call if the call ends accordingly, for example, in the case that AGCF 30 processes the registration of a new service; if the call continues, for example, in the case that AGCF 30 processes an abbreviated dialling service, AGCF 30 acquires the Private User Identity and the Public User Identity corresponding to the user according to the identity of AGF 40 and the identity of the user port, maps the 12 interface protocol to the SIP, and sends an INVITE message to S-CSCF 11. It should be noted that the user subscription information and service data related to the basic service and the supplementary service of the PSTN/ISDN are stored in AGCF 30, or stored in the HSS and downloaded to AGCF 30 when AGCF 30 starts up or when the user registers; other user subscription information and service data are stored in the HSS in IMS 10.

In Step 540, S-CSCF 11 triggers the service according to the user subscription information and sends the INVITE message to PSTN/ISDN Simulation AS 20.

In Step 550, PSTN/ISDN Simulation AS 20 sends the INVITE message to S-CSCF 11 upon performing the corresponding control of the value-added service of the PSTN/ISDN.

In Step 560, S-CSCF 11 keeps controlling the session and determines to trigger a new service or to implement the connection control and the routing subsequently. If S-CSCF 11 determines according to the user subscription data that a new service needs to be triggered in another AS, perform Step 570; otherwise, S-CSCF 11 implements the connection control and the routing, specifically, sends the INVITE message to the I-CSCF of the home domain of the called user if the called user is in the IMS domain, e.g., the caller user is also a user accessing through AGF 40; sends the INVITE message to the BGCF if the called user is outside the IMS domain.

In Step 570, when S-CSCF 11 determines according to the user subscription data that a new service needs to be triggered in another AS, S-CSCF 11 triggers the new service and sends the INVITE message to AS 21 corresponding to the new service.

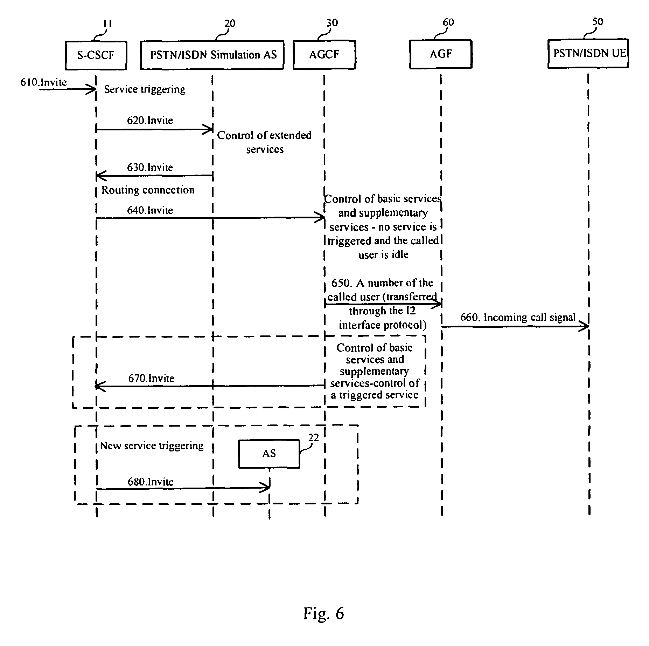

The calling process of an incoming call to a user accessing through the AGF is shown in Fig.6.

In Step 610, the S-CSCF 11 of the home domain of the called user triggers a service according to the user subscription information upon receiving an INVITE message.

In Step 620, S-CSCF 11 sends the INVITE message to PSTN/ISDN Simulation AS 20.

In Step 630, PSTN/ISDN Simulation AS 20 sends the INVITE message to S-CSCF 11 upon implementing the corresponding control of the value-added services.

In Step 640, S-CSCF 11 keeps controlling the session and determines to trigger a subsequent new service or to implement the connection control and the routing. If S-CSCF 11 determines according to the user subscription data that a service needs to be triggered in another AS, perform Step 680; otherwise, S-CSCF 11 implements the connection control and the routing, specifically, sends the INVITE message to AGCF 30 when the called user is a user accessing through the AGF, then perform Step 650.

In Step 650, AGCF 30 determines whether one of the basic services and the supplementary services of the PSTN/ISDN has been triggered. If yes, perform Step 670. If no, that is, if the called user is idle, AGCF 30 locates both the AGF accessed by the user and the user port according to such information as the Public User Identity and the Private User Identity of the called user, maps the SIP to the 12 interface protocol, and transfers the called number to AGF 40 through the 12 interface protocol; then perform Step 660.

In Step 660, AGF 40 sends the incoming call signal to PSTN/ISDN UE 50.

In Step 670, because AGCF 30 has triggered the service, AGCF 30 performs the corresponding control of the PSTN/ISDN service, and when the control is finished, determines whether the call requires S-CSCF 11 to perform session control again. For example, when AGCF 30 completes the call forwarding service of the called user and sends the INVITE message to S-CSCF 11, S-CSCF 11 continues with the session control. When the call ends accordingly, AGCF 30 terminates this call, for example, terminates this call if AGCF 30 finishes processing a Don't Disturb Service. If the called user is called sequentially, for example, when AGCF 30 completes processing the queuing service and the called user is idle, AGCF 30 locates both AGF 40 accessed by the user and the user port according to the Public User Identity of the called user and the information recorded when the user registers, maps the SIP to the 12 interface protocol, and transfers the called number to AGF 40 through the 12 interface protocol. Then perform Step 660.

In Step 680, S-CSCF 11 triggers a new service and sends an INVITE message to AS 22 corresponding to the new service.

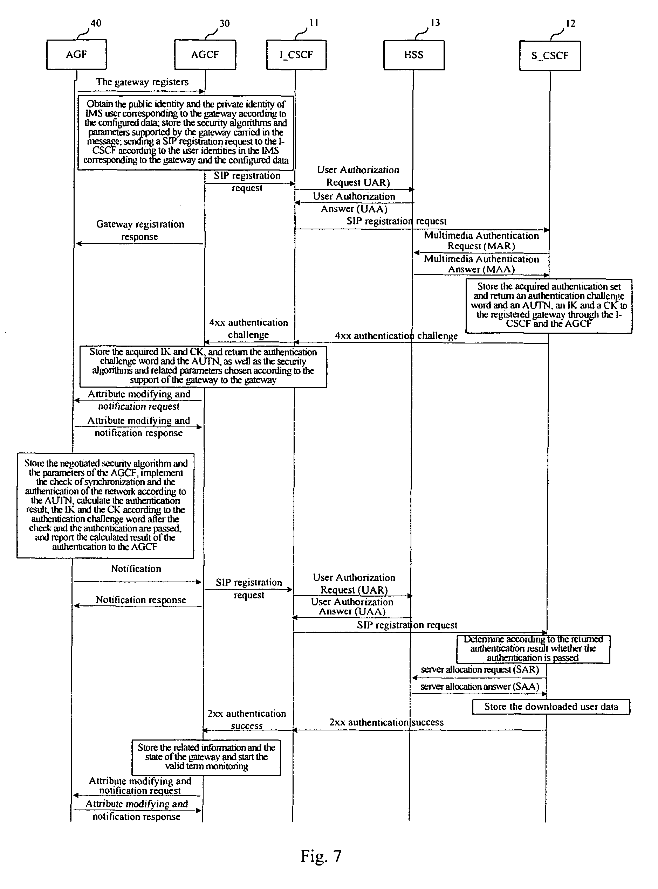

In the method for processing packet domain service signals in accordance with an embodiment of the present invention, the process of registration, access authentication and security algorithm negotiation of a user accessing through the AGF in the IMS domain is described below with reference to Fig.7.

First, AGF 40 sends a gateway registration message to AGCF 30 upon starting up and AGCF 30 responds with a gateway registration response. The gateway registration message carries the identity and the address of AGF 40, the security algorithms and parameters supported by AGF 40, and the gateway registration message is not encrypted or covered by integral protection.

Upon receiving the gateway registration message, AGCF 30 acquires the public identity and the private identity of IMS user corresponding to AGF 40 according to the configuration data, stores the security algorithms and parameters supported by AGF 40 carried in the gateway registration message, and then sends an SIP registration request to I-CSCF 11 according to the public identity and the private identity of IMS user corresponding to AGF 40 and the configuration data.

Next, I-CSCF 11, HSS 13 and S-CSCF 12 implement the normal initial registration process in the IMS domain. In this process, the normal initial registration process in the IMS domain includes:
I-CSCF 11 sends a User Authentication Request (UAR) to HSS 13 for inquiring about a user registration state, HSS 13 checks the validity of the UAR of the user and returns a User Authentication Answer (UAA) and information of a serving node allocated for the user;
I-CSCF 11 forwards an SIP registration request to S-CSCF 12 determined according to the information of the serving node returned by the HSS 13;
the S-CSCF 12 determines that it is initial registration and that an authentication set of the user has not been stored in local yet, sends a Multimedia Authentication Request (MAR) to HSS 13, and acquires the authentication set of the user from a Multimedia Authentication Answer (MAA) returned by HSS 13;
the S-CSCF 12 stores the authentication set acquired, returns an authentication challenge message carrying an authentication challenge word, AUTN, an IK and a CK, to the registered gateway AGF 40 through the I-CSCF 11 and the AGCF 30.

Upon receiving the authentication challenge message returned, AGCF 30 stores the IK and the CK, returns the authentication challenge word and AUTN as well as the security algorithms and parameters supported locally which are chosen according to the support of AGF 40, to AGF 30 by an attribute modifying and notification request.

AGF 40 authenticates the network according to the AUTN, calculates an authentication result according to the authentication challenge word after the network passes the authentication, and sends a notification message to AGCF 30. The notification message carries the authentication result and the security algorithms chosen eventually.

Upon receiving the notification message, AGCF 30 returns a notification response, stores the security algorithms chosen eventually, acquires the public identity and the private identity of IMS user corresponding to AGF 40 according to the configuration data, transforms the protocol in the registration process, sets the indication of integrity protection as "Yes", and sends an SIP registration request again to I-CSCF 11 according to the public identity and the private identity of IMS user corresponding to AGF 40 and the configuration data. The stored security algorithm chosen eventually will be applied to subsequent interaction with AGF 40, as well as interaction with a terminal accessing through AGF 40, and the SIP registration request carries the authentication result.

I-CSCF 11, HSS 13 and S-CSCF 12 implement the normal initial registration process in the IMS domain. In this process, the normal initial registration process in the IMS domain includes:
I-CSCF 11 sends a UAR to HSS 13, HSS 13 responds with a UAA and returns information of the serving node;
I-CSCF 11 forwards the SIP registration request to the S-CSCF 12 determined according to the information of the serving node returned by the HSS 13;
S-CSCF 12 authenticates AGF 40 by determining whether the authentication result returned is the same as the expected authentication result in the authentication set stored; and S-CSCF 12 sends a Server Allocation Request (SAR) to HSS 13 for downloading the user subscription data, downloads and stores the user subscription data according to a Server Allocation Answer (SAA) with which HSS 13 responds, returns an authentication success message to the registered gateway AGF 40 through 1-CSCF 11 and AGCF 30.

Finally, upon receiving the authentication success message returned, AGCF 30 stores related information, starts monitoring the period of validity of registration, and notifies the AGF 40 that the access authentication has been completed through an attribute modifying and notification request. It should be noted that the message is protected by the security algorithm negotiated and chosen eventually.

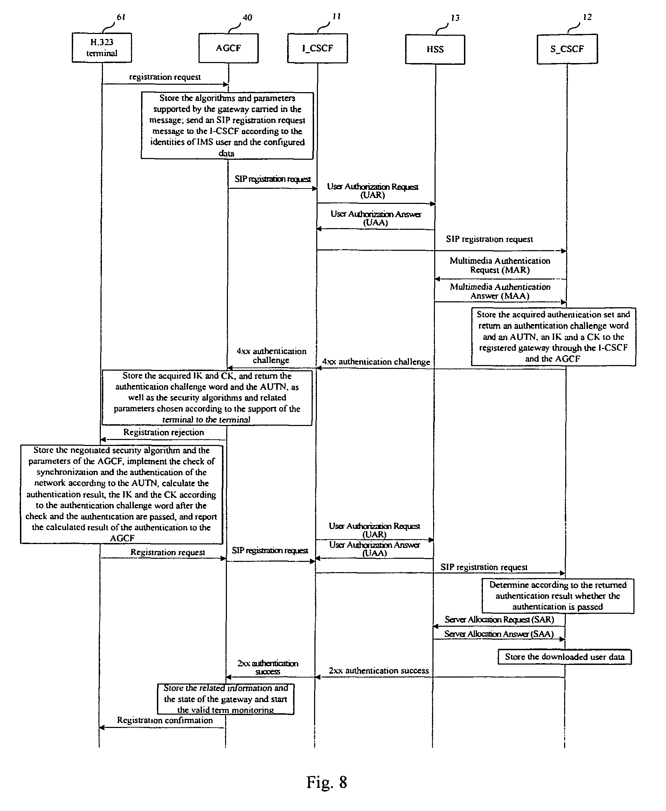

In the method for processing packet domain service signals, the schematic flow chart of the registration, access authentication and security algorithm negotiation of a non-SIP user accessing directly in the IMS domain in accordance with an embodiment of the present invention is shown in Fig.8.

First, H.323 terminal 61 sends a registration request to AGCF 30 upon accessing. The registration request carries the identity and address of the user and the list of security algorithms and parameters supported by the H.323 terminal 61, and is not encrypted or covered by integral protection.

Upon receiving the registration request, AGCF 30 acquires the public identity and the private identity of IMS user carried in the registration request,, stores the security algorithms and parameters supported by H.323 terminal 61 carried in the registration request,, and sends an SIP registration request to I-CSCF 11 according to the public identity and the private identity of IMS user corresponding to H.323 terminal 61 and the configuration data.

I-CSCF 11, HSS 13 and S-CSCF 12 perform the normal initial registration process in the IMS domain. In this process, the normal initial registration process in the IMS domain includes:
I-CSCF 11 sends a UAR to HSS 13 for inquiring about the registration state of the user, HSS 13 checks the validity of the UAR of the user and returns a UAA and information of the serving node allocated for the user;
I-CSCF 11 forwards the SIP registration request to the S-CSCF 12 determined according to the information of the serving node returned by the HSS 13;
the S-CSCF 12 determines that it is initial registration and that the authentication set of the user has not been stored locally yet, thus sends a MAR to HSS 13, acquires the authentication set of the user from an MAA returned by HSS 13, stores the authentication set acquired, and returns, to the registered gateway AGF 40 through I-CSCF 11 and AGCF 30, an authentication challenge message carrying an authentication challenge word as well as AUTN, IK and CK.

Upon receiving the authentication challenge message returned, AGCF 30 stores the IK and the CK, returns to H.323 terminal 61 a registration rejection message carrying the authentication challenge word, the AUTN as well as the security algorithms and related parameters supported locally and chosen according to the support of H.323 terminal 61.

H.323 terminal 61 stores the security algorithm negotiated and the parameters of the AGCF 30, implements the synchronization check and the authentication of the network according to the AUTN, calculates an authentication result, the IK and the CK according to the authentication challenge word after the synchronization check and the authentication succeed, and sends a new registration request to AGCF 30. The new registration request carries the authentication result and the security algorithm chosen eventually.

Upon receiving the new registration request, AGCF 30 stores the security algorithm chosen eventually, transforms the protocol in the registration process, sets the indication of integrity protection as "Yes", and sends a new SIP registration request to I-CSCF 11 according to the identities of IMS user and the configuration data. The stored security algorithm chosen eventually will be applied to subsequent interaction with H.323 terminal 61, and the new SIP registration request carries the authentication result.

Then, I-CSCF 11, HSS 13 and S-CSCF 12 perform the normal initial registration process in the IMS domain. In this process, the normal initial registration process in the IMS domain includes:
I-CSCF 11 sends a UAR to HSS 13 for inquiring about the registration state of the user, and HSS 13 responds with a UAA and returns information of the serving node;
I-CSCF 11 forwards the new SIP registration request to the S-CSCF 12 determined according to the information of the serving node returned by the HSS 13; and
S-CSCF 12 authenticates H.323 terminal 61 through determining whether the authentication result returned is the same as the expected authentication result in the authentication set stored, sends a SAR to HSS 13 for downloading the user data, downloads and stores the user data according to an SAA with which HSS 13 responds, and returns an authentication success message to H.323 terminal 61 through I-CSCF 11 and AGCF 30.

Finally, upon receiving the authentication success message, AGCF 30 stores related information, starts monitoring the period of validity of registration, and notifies H.323 terminal 61 through a registration confirmation message that the access authentication is finished. The message is protected using the negotiated security algorithm eventually chosen.

Those skilled in the art may appreciate that the registration, access authentication and security algorithm negotiation of a non-SIP user accessing directly and AGF 40 in the IMS domain differ from those of the prior art only in the interactive messages between AGCF 30 and the access devices. Thus, the access of a non-SIP user may be managed uniformly in the IMS domain.

At the same time, during processing the access of an AGF, the access authentication and security algorithm negotiation in the IMS are implemented with AGF 40 treated as a special user. And, for an H.248/MGCP packet user accessing directly, its access authentication and security algorithm negotiation in the IMS may be implemented in the same way.

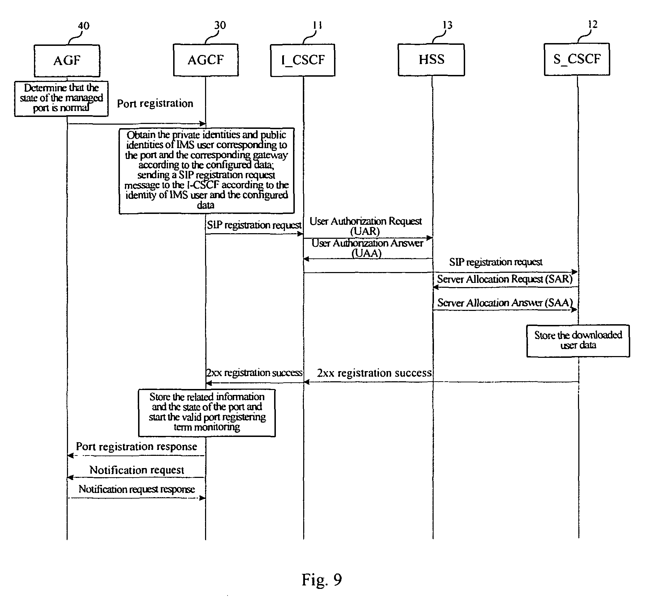

In an embodiment of the present invention, the registration process of a user accessing through an AGF in the IMS domain in the method for processing packet domain service signals is hereinafter described and Fig.9 is the schematic diagram.

First, AGF 40 sends a port registration message to AGCF 30 upon detecting that the state of a port managed by AGF 40 changes to normal. The port registration message carries the identity and address of the gateway, and the number of the port, and is protected using the security algorithm negotiated when the gateway registered.

Upon receiving the port registration message, AGCF 30 acquires the private identity and public identity of the IMS user corresponding to the gateway and the port according to the configuration data, converts the protocol in the registration process, sets the indication of integrity protection as "Yes", and sends an SIP registration request to I-CSCF 11 according to the configuration data and the public identity of IMS user corresponding to the port.

I-CSCF 11, HSS 13, S-CSCF 12 determines whether to implement the normal re-registration process in the IMS domain according to the indication of integrity protection. In this process, the normal re-registration process in the IMS domain includes:
I-CSCF 11 sends a UAR to HSS 13 for inquiring about the registration state of the user, HSS 13 responds with a UAA and returns information of the serving node;
I-CSCF 11 forwards the SIP registration request to the S-CSCF 12 determined according to the information of the serving node returned by the HSS 13; and
S-CSCF 12 determines it as re-registration according to the indication of integrity protection in the registration message, thus performs no access authentication any more, but directly sends an SAR to HSS 13 for downloading the user subscription data, acquires the user subscription data from an SAA with which HSS 13 responds and stores it, and then returns a registration success message to AGCF 30 through I-CSCF I1.

Finally, upon receiving the registration success message, AGCF 30 stores related information, starts monitoring the period of validity of registration of the public identity corresponding to the port, and instructs AGF 40 through a port registration response that the port registration is finished, and then instructs AGF 40 through a notification request to monitor the off-hook event of the terminal of the port. The interactive messages between AGCF 30 and AGF 40 are protected using the security algorithm negotiated when AGF 40 registered.

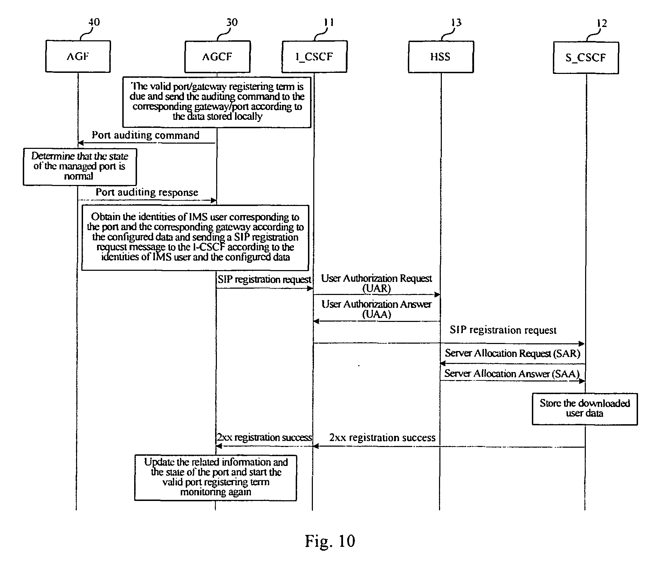

In an embodiment of the present invention, the process for maintaining the registration validity state of a user accessing through an AGF in the IMS domain in the method for processing packet domain service signals is hereinafter described and Fig. 10 is the schematic diagram.

First, AGCF 30 detects that the period of validity of registration of the port is due, and sends a port auditing command to the corresponding gateway/port according to the data stored locally, and AGF 40 returns a port auditing response upon confirming the state of the port managed by itself.

Upon receiving the port auditing response, if the state of the port is normal, AGCF 30 acquires the identities of IMS user corresponding to the port and the gateway corresponding to the port according to the configuration data, and sends an SIP registration request for periodical re-registration to I-CSCF 11 according to the identities of IMS user and the configuration data.

I-CSCF 11, HSS 13, and S-CSCF 12 determine to perform the normal periodical re-registration process in the IMS domain according to the indication of integrity protection. The normal periodical re-registration process in the IMS domain includes:
I-CSCF 11 sends a UAR to HSS 13 for inquiring about the registration state of the user, HSS 13 responds with a UAA and returns the domain name of the serving node allocated when the user registered, i.e. the S-CSCF;
I-CSCF 11 forwards the SIP registration request to S-CSCF 12; and
S-CSCF 12 optionally sends according to the state of the user data stored locally an SAR to HSS 13 for downloading and updating the user data, acquires the updated user data from an SAA with which HSS 13 responds and stores it, and returns a registration success message to AGCF 30 through I-CSCF 11.

Finally, upon receiving the registration success message returned, AGCF 30 stores related information, restarts monitoring the period of validity of registration of the public identity corresponding to the port, and the message is protected using the security algorithm negotiated when AGF 40 registered.

In accordance with an embodiment of the present invention, the process for originating a call by a user accessing through an AGF in the IMS domain in the method for processing packet domain service signals is hereinafter described and Fig. 1 is the schematic diagram.

First, AGF 40 detects the off-hook of a user managed by itself and sends a notification message to AGCF 30. AGCF 30 returns a notification response upon receiving the notification message.

AGCF 30 issues an attribute modifying and notification request to notify AGF 40 to play the dialling tone for the user and receive the number. AGF 40 returns an attribute modifying and notification response, plays the dialling tone to the user, monitors the hook event and waits for the user to input the number of the called user.

Upon receiving the number of the called user, AGF 40 sends a notification message to AGCF 30 to report the number of the called user. AGCF 30 returns a notification response and issues a connection creating message, meanwhile, it requests AGF 40 to stop receiving the dialing number and keep monitoring the hook event. AGF 40 returns a connection creating response to report connection parameters of the created connection. In this process, the connection mode is set as a receiving mode in the connection creating message.

AGCF 30 acquires the identities of IMS user corresponding to the gateway/port according to the local configuration and the number of the port and the connection parameters reported by AGF 40, sends to S-CSCF 12 an SIP session creating request carrying the connection parameters of the created connection reported by AGF 40 according to the information recorded when the terminal registered.

S-CSCF 12 performs the standard session control of the calling side in the IMS domain, including:
CSCF 12 triggers the control of the service according to the subscription data upon receiving the session creating request, and forwards the session creating request to the called side upon receiving the session creating request returned by the last application server;
CSCF 12 forwards a series of the session creating messages between AGCF 30 and the called side, and interacts with the Charging Collection Function (CCF) 70 to start charging upon receiving the session creating success message.

In the process above, S-CSCF 12 acquires the user subscription data downloaded when the user registered by the index of the identity of the calling user, and the session creating messages include: a session creating proceeding message, a temporary response confirmation message and a temporary response confirmation response, a resource reservation success message and a resource reservation success response, a called user ring message, a session creating success message and a session creating success confirmation message. In addition, the process of starting charging includes: S-CSCF 12 sends a charging start request to CCF 70, and CCF 70 returns a charging start response upon receiving the charging start request.

In the process above, upon receiving the session creating proceeding message, AGCF 30 interacts with the PDF to perform an QoS resource authorization according to a session description protocol instruction carried in it, and returns a temporary response confirmation message to S-CSCF 12.

AGCF 30 confirms the QoS resource reservation upon receiving the temporary response confirmation response returned by S-CSCF 12 and returns a resource reservation success message through S-CSCF 12 upon confirming that the QoS resource reservation is finished. Confirming the QoS resource reservation is implemented by the interaction between AGCF 30 and the PDF.

AGCF 30 acquires information of the gateway and the port according to the identities of the user and the configuration data upon receiving the called user ring message, and issues an attribute modifying and notification request to AGF 40 to instruct AGF 40 to play the ring back tone to the user and keep monitoring the hook event.

Upon receiving the attribute modifying and notification request, AGF 40 plays the ring back tone to the user and returns an attribute modifying and notification response.

Upon receiving the session creating success message forwarded by S-CSCF 12, AGCF 30 allows the use of the reserved QoS resource, acquires the information of the gateway and the port according to the identities of the user and the configuration data, issues an attribute modifying and notification response to AGF 40 to instruct AGF 40 to modify the mode of the connection as a receiving/sending mode, interacts with CCF 70 to start charging, and returns a session creating success confirmation message to S-CSCF 12. In this process, AGCF 30 interacts with the PDF to allow the use of the reserved QoS resource.

Finally, AGF 40 modifies the attribute of the connection as the attribute of receiving/sending and returns an attribute modifying and notification response to AGCF 30, and then the user starts talking.

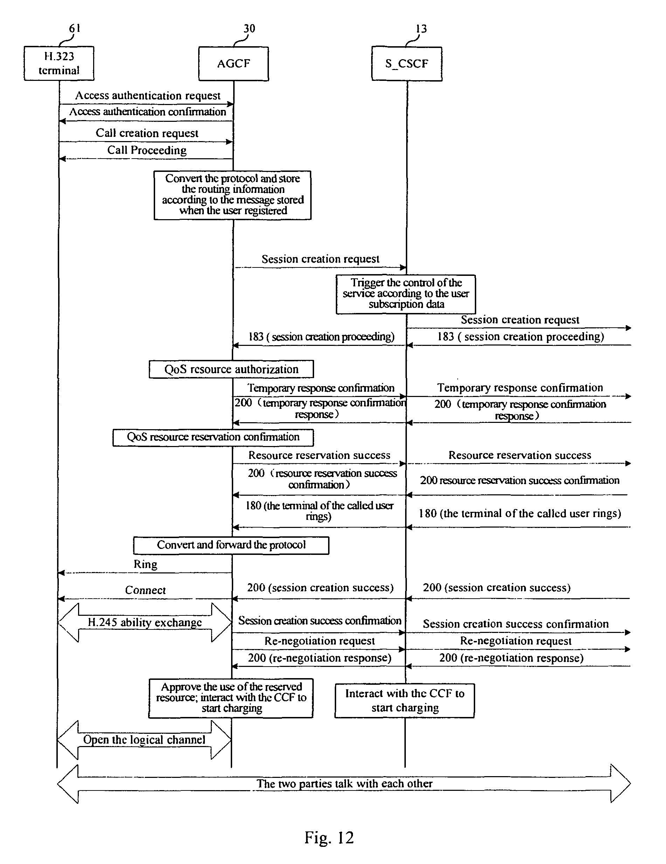

In accordance with an embodiment of the present invention, the process of originating a call by a non-SIP user (e.g., H.323) in the IMS domain in the method for processing packet domain service signals is hereinafter described and Fig. 12 is the schematic diagram.

First, H.323 terminal 61 sends a user Access Authentication Request (ARQ) to AGCF 30. AGCF 30 confirms the validity according to the information recorded when the user registered upon receiving the ARQ, and returns a call Access Authentication Confirmation (ACF) message after the validity is confirmed.

H.323 terminal 61 sends a call Setup request to AGCF 30 upon receiving the ACF message, and AGCF 30 returns a Call Proceeding message.

AGCF 30 converts the protocol, stores the routing information according to the message recorded when H.323 terminal 61 registered, and sends a session creating request to S-CSCF 12. It should be noted that because the H.245 interaction process of H.323 terminal 61 relatively lags, the attribute of media flow described in the session creating request is inactive.

S-CSCF 12 performs the standard session control of the calling side in the IMS domain, which includes:
S-CSCF triggers the control of the service according to the subscription data upon receiving the session creating request, and forwards the session creating request to the called side upon receiving the session creating request returned by the last application server; S-CSCF 12 forwards a series of session creating messages between AGCF 30 and the called side; interacts with CCF 70 to start charging after receiving the session creating success message.
In the process above, S-CSCF 12 acquires the user subscription data downloaded when the user registered by the index of the identity of the calling user, and the session creating message includes: a session creating proceeding message, a temporary response confirmation message and a temporary response confirmation response, a resource reservation success message and a resource reservation success response, a called user ring message, a session creating success message and a session creating success confirmation message. In addition, the process of starting charging includes: S-CSCF 12 sends a charging start request to CCF 70 and CCF 70 returns a charging start response upon receiving the charging start request.

In the process above, upon receiving the session creating proceeding message, AGCF 30 implements the QoS resource authorization and returns a temporary response confirmation message. In this process, AGCF 30 interacts with the PDF to implement the QoS resource authorization according to the session description protocol instruction carried in the session creating proceeding message.

AGCF 30 performs the QoS resource reservation confirmation upon receiving the temporary response confirmation response and returns a resource reservation success message upon confirming that the resource reservation is finished. In this process, the QoS resource reservation confirmation is implemented by the interaction between AGCF 30 and the PDF.

Upon receiving a ring (Alert) message from the called user, AGCF 30 converts the protocol and forwards the ring message to H.323 terminal 61.

Upon receiving the session creating success message, AGCF 30 converts the protocol, sends a Connect message to H.323 terminal 61, performs the H.245 ability interchange with H.323 terminal 61, and then sends a session creating success confirmation message and a re-negotiation request to S-CSCF 12. The re-negotiation request is applied to instruct S-CSCF 12 to modify the attribute of media flow as active.

Finally, upon receiving a re-negotiation response, AGCF 30 interacts with the PDF to allow the use of the reserved QoS resource, performs the H.245 interaction with H.323 terminal 61 to open the logical channel, interacts with CCF 70 to start charging, and the users starts talking.

Fig. 3 is the schematic diagram of the process of terminating a call of a user accessing through an AGF in the IMS domain in the method for processing packet domain service signals in accordance with an embodiment of the present invention.

First, S-CSCF 12 performs the standard session control of the called side in the IMS domain, which includes:
upon receiving the session creating request, S-CSCF 12 finds the subscription data downloaded when the user registered according to the index of the identity of the called user in the session creating request, triggers the service according to the subscription data; upon receiving the session creating request returned by the last application server, S-CSCF 12 forwards the session creating request to AGCF 30 according to the information stored when the user registered; S-CSCF 12 forwards a series of session creating messages between the calling side and AGCF 30, interacts with CCF 70 to start charging upon receiving the session creating success message.

In the process above, the session creating messages include: a session creating proceeding message, a temporary response confirmation message and a temporary response confirmation response, a resource reservation success message and a resource reservation success response, a called user ring message, a session creating success message and a session creating success confirmation message. In addition, the process of starting charging includes: S-CSCF 12 sends a charging start request to CCF 70 and CCF 70 returns a charging start response upon receiving the charging start request.

At the same time, upon receiving the session creating request, AGCF 30 acquires the corresponding gateway address and port information according to the local configuration, the identity of the called user and the information recorded when the terminal registered, and issues a connection creating message to AGF 40, with the connection mode set as the receiving mode.

AGF 40 creates the connection according to the connection creating message and returns a connection creating response. Upon receiving the connection creating response, AGCF 30 interacts with the PDF to implement the QoS resource authorization and returns the session creating proceeding message to S-CSCF 12. The connection creating response carries the parameters related to the connection while the session creating proceeding message carries a session description protocol instruction.

AGCF 30 returns a temporary response confirmation response upon receiving the temporary response confirmation message.

Upon receiving a resource reservation success message, AGCF 30 interacts with the PDF to implement the QoS resource reservation confirmation, issues an attribute modifying and notification request to AGF 40 to instruct AGF 40 to play a ring to the called user and monitor the off-hook event of the user, returns a resource reservation success message after the resource reservation is finished, and returns a called user ring message to S-CSCF 12 upon receiving the attribute modifying and notification response returned by AGF 40.

AGF 40 plays the ring to the user according to the instruction of the called user ring message, monitors the off-hook event and sends a notification message to AGCF 30 after the user picks up the phone. The notification message indicates the off-hook event of the user.

Finally, upon receiving the notification message indicating the off-hook event of the user, AGCF 30 interacts with the PDF to allow the use of the reserved QoS resource, acquires the identity of the user according to the gateway information and the port information, sends a session creating success message to S-CSCF 12, issues an attribute modifying and notification request to AGF 40 to instruct AGF 40 to stop the ring and monitor the hook of the user, interacts with CCF 70 to start charging, and after AGCF 30 receives the session creating success confirmation message from S-CSCF 12, the user starts talking.

Fig. 14 is a schematic diagram of the process of terminating a call of a non-SIP user (H.323) in the IMS domain in the method for processing packet domain service signals in accordance with an embodiment of the present invention.

In this process, S-CSCF 12 needs to perform the standard session control of the called side in the IMS domain, which includes:
upon receiving the session creating request, S-CSCF 12 finds the subscription data downloaded when the user registered according to the index of the identity of the called user in the session creating request, triggers the service according to the subscription data;
upon receiving the session creating request returned by the last application server, S-CSCF 12 forwards the session creating request to AGCF 30 according to the information stored when the user registered; and
S-CSCF 12 forwards a series of session creating messages between the calling side and AGCF 30, and interacts with CCF 70 to start charging upon receiving the session creating success message.

In the process above, the session creating messages forwarded by S-CSCF 12 include: a session creating proceeding message, a temporary response confirmation message and a temporary response confirmation response, a resource reservation success message and a resource reservation success confirmation message, a called user ring message, a session creating success message and a session creating success confirmation message.

At the same time, when AGCF 30 receives the session creating request, AGCF 30 sends a call Setup request to H.323 terminal 61 according to the information recorded when the terminal registered, the terminal returns a Call Proceeding message. And AGCF 30 then sends an access Authentication Request (ARQ) to AGCF 30.

Upon receiving the access Authentication Request (ARQ), AGCF 30 interacts with the PDF according to the requested bandwidth parameter in it to implement the QoS resource authorization, converts the protocol, and returns a session creating proceeding message to S-CSCF 12. The session creating proceeding message carries a session description protocol instruction.

AGCF 30 returns a temporary response confirmation response upon receiving the temporary response confirmation message.

Upon receiving the resource reservation success message, AGCF 30 interacts with the PDF to perform the QoS resource reservation confirmation, and returns an access authentication confirmation message to H.323 terminal 61.

Upon receiving the access authentication confirmation message, H.323 terminal 61 starts to play a ring and sends a ring (Alert) message to AGCF 30. Upon receiving the ring message, AGCF 30 converts the protocol and returns a called user ring message to S-CSCF 12.

After the user answers, H.323 terminal 61 sends a Connect message to the AGCF 30. After receiving the Connect message, the AGCF 30 performs the H.245 ability interaction with the H.323 terminal 61, and then sends a re-negotiation request to S-CSCF 12.

Finally, upon receiving a re-negotiation response returned by S-CSCF 12, AGCF 30 sends a session creating success message to S-CSCF 12, interacts with the PDF to allow the use of the reserved QoS resource, interacts with CCF 70 to start charging, and performs the H.245 interaction with H.323 terminal 61 to open the logical channel. When AGCF 30 receives the session creating success confirmation message from S-CSCF 12, the user starts talking.

Though the present invention has been illustrated and described by referring to some preferred embodiments of the present invention, those skilled in the art should understand that various changes can be made in its form and detail without departing from the scope of the present invention described in the appended claims.

## Claims

1. A system for processing a packet domain service signal, comprising:
an Internet Protocol Multimedia Subsystem, IMS, (10) and **characterized by** comprising
at least one access gateway function , AGF, (40) for implementing a function of conversion between a narrowband voice in a circuit domain and an Internet Protocol, IP, media flow in a packet domain, and a function of conversion between user interface signalling in the circuit domain and call control signalling in the packet domain; and
at least one access gateway control function , AGCF, (30) for implementing access management and call control for the AGF (40), for configuring a user identity and an AGF identity for a user in the circuit domain, and for enabling a user equipment (50) which accesses the AGCF (30) through the AGF (40) to access a Call Session Control Function, CSCF, (11) in the IMS, wherein the AGCF (30) comprises means for obtaining the user identity of a calling user according to the AGF identity and a user port identity, or locating an AGF (40) and a user port which a called user accesses according to the user identity; and
converting between Session Initiation Protocol, SIP, and an interface protocol of an interface through which the AGCF (30) is connected to the AGF (40).

2. The system of claim 1, further comprising a first application server (20) for providing a function of service control of a Public Switched Telephone Network, PSTN, /Integrated Services Digital Network, ISDN, according to service triggering of the CSCF.

3. The system of claim 2, wherein the first application server (20) comprises means for implementing the service control of the PSTN/ISDN including control of a basic service, a supplementary service and an extended value-added service, such as network directory, instant message, Presence service, unified message service, click dialling, click transfer, click queue, click convention, intelligent routing, customized ring back tone, calling user coloured image, task customization and prompt, and self-help management.

4. The system of claim 2, wherein the AGCF (30) comprises means for processing a basic service and a supplementary service of the PSTN/ISDN; and the first application server (20) comprises means for processing an extended value-added service, such as a Web Client, the services, such as network directory, instant message, Presence service, unified message service, click dialling, click transfer, click queue, click convention, intelligent routing, customized ring back tone, calling user coloured image, task customization and prompt, and self-help management.

5. The system of claim 1, wherein the AGCF (30) comprises means for generating a charging request according to a requirement defined by a standard of the IMS, and sending the charging request to a charging collection unit in the IMS.

6. The system of claim 1 or 2, wherein the AGCF comprises means for implementing registration and authentication of the AGF (40).

7. The system of claim 1, wherein the interface adopts one of H.248 protocol, Media Gateway Control Protocol, the SIP and the IUA/V5UA over SIGTRAN protocol.

8. A method for processing a packet domain service signal, when a user makes an outgoing call, the method comprising:
configuring, by an access gateway control function AGCF, (30) a user identity and an identity of an access gateway function, AGF, (40); transferring (320), by the AGF (40), a first message to the AGCF (30) upon receiving a dialling signal from a user equipment (50) processing a service signal of a Public Switched Telephone Network, PSTN, /Integrated Services Digital Network, ISDN;
upon receiving the first message, obtaining (330) by the AGCF (30), the user identity according to the identity of the AGF (40) and a user port identity, converting (330) the first message to an Session Initiation Protocol, SIP, request message, and sending (330) the SIP message to a Call Session Control Function, CSCF (11), in an Internet Protocol Multimedia Subsystem, IMS;
implementing (340,360,370), by the CSCF (11), service triggering according to user subscription information, and sending a second message to a first application server (20);
upon receiving the second message, implementing (350), by the first application server (20) service control of the PSTN/ISDN, and notifying the CSCF (11) to continue to implement session control by a third message.

9. The method of claim 8, wherein the process of continuing to implement the session control comprises:
determining whether the third message received triggers a new service;
if the third message received triggers a new service, triggering the new service and sending a new SIP request message to an application server (21) corresponding to the new service;
otherwise, implementing connection control and routing.

10. The method of claim 9, wherein the process of implementing the connection control and the routing comprises determining whether a called user is in a domain of the IMS;
if the called user is in the domain of the IMS, sending an SIP request message to a Serving Call Session Control Function in a home domain of the called user;
otherwise, sending an SIP request message to a Breakout gateway control function.

11. The method of claim 8, wherein the service control of the PSTN/ISDN comprises control of a basic service, a supplementary service and an extended value-added service, such as network directory, instant message, Presence service, unified message service, click dialling, click transfer, click queue, click convention, intelligent routing, customized ring back tone, calling user coloured image, task customization and prompt, and self-help management.

12. The method of claim 8, further comprising:
before converting the first message to the SIP request message, and sending the SIP request message to the CSCF in the IMS, controlling a basic service and a supplementary service of the PSTN/ISDN; wherein the service control of the PSTN/ISDN implemented by the first application server comprises control of an extended value-added service, such as network directory, instant message, Presence service, unified message service, click dialling, click transfer, click queue, click convention, intelligent routing, customized ring back tone, calling user coloured image, task customization and prompt, and self-help management.

13. The method of claim 8, wherein the first message adopts one of H.248 protocol, Media Gateway Control Protocol, the SIP and the IUA/V5UA over SIGTRAN protocol.

14. A method for processing a packet domain service signal, when a user makes an incoming call, the method comprising:
configuring, by an access gateway control function, AGCF, (30), a user identity and an identity of an access gateway function, AGF, (40);
upon receiving a Session Initiation Protocol, SIP, request message, triggering (410), by a Call Session Control Function, CSCF (11), in a home domain of the called user, a service according to user subscription information, and sendind (420) a fourth message to a first application server (20);
upon receiving the fourth message, implementing (430), by the first application server (20) service control of a Public Switched Telephone Network, PSTN, /Integrated Services Digital Network ,ISDN, and sending (430) a fifth message to the CSCF (11),
upon receiving the fifth message, implementing (440), by the CSCF (11), connection control and routing , and sending (440) a Session Initiation Protocol, SIP request message to AGCF (30);
upon receiving the SIP request message, locating (450), by the AGCF (30), the AGF (40) that the called user accesses and a user port according to the called user identity, converting (450) the SIP request message to a sixth message, and notifying (450) the access gateway function to send an incoming call signal to a user equipment (50) processing a service signal of the PSTN/ISDN.

15. The method of claim 14, wherein the processes of implementing the connection control and the routing, and sending the SIP request message to the AGCF (30) comprise:
upon receiving the fifth message, determining whether a new service is triggered;
if the new service is triggered, triggering the new service and sending an SIP request message to an application server (22) corresponding to the new service;
otherwise, implementing the connection control and the routing, and sending an SIP request message to the AGCF (30).

16. The method of claim 14, wherein the service control of the PSTN/ISDN implemented by the first application server (20) comprises control of a basic service, a supplementary service and an extended value-added service, such as network directory, instant message, Presence service, unified message service, click dialling, click transfer, click queue, click convention, intelligent routing, customized ring back tone, calling user coloured image, task customization and prompt, and self-help management.

17. The method of claim 14, wherein the service control of the PSTN/ISDN implemented by the first application (20) server comprises control of an extended value-added service, such as network directory, instant message, Presence service, unified message service, click dialling, click transfer, click queue, click convention, intelligent routing, customized ring back tone, calling user coloured image, task customization and prompt, and self-help management;
upon receiving the SIP request message, the AGCF (30) determines whether a basic service and a supplementary service of the PSTN/ISDN are triggered;
if the basic service and the supplementary service are triggered, the AGCF (30) controls the basic service and the supplementary service that are triggered, and determines whether to carry out the session control again for the incoming call;
if determining to carry out the session control again for the incoming call, the AGCF (30) sends an SIP request message to the CSCF, and the CSCF continues to implement the session control again;
if determining not to carry out the session control again for the incoming call, the incoming call is terminated;
if the basic service and the supplementary service are not triggered, the AGCF (30) locates the AGF (40) that the called user accesses and a user port according to the called user identity, converts the SIP request message to the sixth message, and notifies the AGF (40) to send an incoming call signal to the user equipment (50) processing the service signal of the PSTN/ISDN.

18. The method of claim 14, wherein the sixth message adopts one of H.248 protocol, Media Gateway Control Protocol, the SIP and the IUA/V5UA over SIGTRAN protocol.

## Patentansprüche

1. System zum Verarbeiten eines Paketdomänendienstsignals, wobei das System Folgendes umfasst:
ein Internetprotokoll-Multimediateilsystem IMS (10), und **dadurch gekennzeichnet, dass** es Folgendes umfasst:
wenigstens eine Zugangsgatewayfunktion AGF (40) zum Implementieren einer Funktion der Umsetzung zwischen einer schmalbandigen Sprache in einer Leitungsdomäne und einem Internetprotokoll-Medienfluss, IP-Medienfluss, in einer Paketdomäne und einer Funktion der Umsetzung zwischen einer Anwenderschnittstellensignalisierung in der Leitungsdomäne und einer Anrufsteuerungssignalisierung in der Paketdomäne; und
wenigstens eine Zugangsgateway-Steuerfunktion AGCF (30) zum Implementieren des Zugangsmanagements und der Anrufsteuerung für die AGF (40) zum Konfigurieren einer Anwenderidentität und einer AGF-Identität für einen Anwender in der Leitungsdomäne und zum Ermöglichen, dass ein Teilnehmergerät (50), das über die AGF (40) auf die AGCF (30) zugreift, auf eine Anrufsitzungs-Steuerfunktion CSCF (11) in dem IMS zugreift, wobei die AGCF (30) Mittel zum Erhalten der Anwenderidentität eines anrufenden Anwenders in Übereinstimmung mit der AGF-Identität und mit einer Anwenderportidentität oder zum Auffinden einer AGF (40) und eines Anwenderports, auf den ein angerufener Anwender in Übereinstimmung mit der Anwenderidentität zugreift, umfasst; und
Umsetzen zwischen einem Sitzungsinitiierungsprotokoll SIP und einem Schnittstellenprotokoll einer Schnittstelle, über die die AGCF (30) mit der AGF (40) verbunden ist.

2. System nach Anspruch 1, das ferner einen ersten Anwendungsserver (20) zum Bereitstellen einer Funktion der Dienststeuerung eines öffentlichen Fernsprechwählnetzes PSTN/diensteintegrierenden digitalen Netzes ISDN in Übereinstimmung mit der Dienstauslösung der CSCF umfasst.

3. System nach Anspruch 2, wobei der erste Anwendungsserver (20) Mittel zum Implementieren der Dienststeuerung des PSTN/ISDN einschließlich der Steuerung eines Basisdienstes, eines Zusatzdienstes und eines erweiterten Mehrwertdienstes wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst.

4. System nach Anspruch 2, wobei die AGCF (30) Mittel zum Verarbeiten eines Basisdienstes und eines Zusatzdienstes des PSTN/ISDN umfasst; und der erste Anwendungsserver (20) Mittel zum Verarbeiten eines erweiterten Mehrwertdienstes wie etwa einen Web-Client, der Dienste wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst.

5. System nach Anspruch 1, wobei die AGCF (30) Mittel zum Erzeugen einer Gebührenberechnungsanforderung in Übereinstimmung mit einer durch eine Norm des IMS definierten Anforderung und zum Senden der Gebührenberechnungsanforderung an eine Gebühreneinzugseinheit in dem IMS umfasst.

6. System nach Anspruch 1 oder 2, wobei die AGCF (30) Mittel zum Implementieren einer Registrierung und Authentisierung der AGF (40) umfasst.

7. System nach Anspruch 1, wobei die Schnittstelle das Protokoll H.248, das Media Gateway Control-Protokoll, das SIP oder das IUA/VSUA over SIGTRAN-Protokoll annimmt.

8. Verfahren zum Verarbeiten eines Paketdomänendienstsignals, wenn ein Anwender einen ausgehenden Anruf vornimmt, wobei das Verfahren Folgendes umfasst:
Konfigurieren einer Anwenderidentität und einer Identität einer Zugangsgatewayfunktion AGF (40) durch eine Zugangsgateway-Steuerfunktion AGCF (30);
Übertragen (320) einer ersten Nachricht an die AGCF (30) beim Empfangen eines Wählsignals von einem Teilnehmergerät (50), das ein Dienstsignal eines öffentlichen Fernsprechwählnetzes PSTN/diensteintegrierenden digitalen Netzes ISDN verarbeitet, durch die AGF (40);
beim Empfangen der ersten Nachricht, Erhalten (330) der Anwenderidentität in Übereinstimmung mit der Identität der AGF (40) und einer Anwenderportidentität durch die AGCF (30), Umsetzen (330) der ersten Nachricht in eine Sitzungsinitiierungsprotokoll-Anforderungsnachricht, SIP-Anforderungsnachricht, und Senden (330) der SIP-Nachricht an eine Anrufsitzungs-Steuerfunktion CSCF (11) in einem Internetprotokoll-Multimediateilsystem IMS;
Implementieren (340, 360, 370) der Dienstauslösung in Übereinstimmung mit Anwenderabonnementinformationen durch die CSCF (11) und Senden einer zweiten Nachricht an einen ersten Anwendungsserver (20),
beim Empfang der zweiten Nachricht, Implementieren (350) der Dienststeuerung des PSTN/ISDN durch den ersten Anwendungsserver (20) und Benachrichtigen der CSCF (11) zum Fortsetzen des Implementierens der Sitzungssteuerung durch eine dritte Nachricht.

9. Verfahren nach Anspruch 8, wobei der Prozess zum Fortsetzen des Implementierens der Sitzungssteuerung Folgendes umfasst:
Bestimmen, ob die empfangene dritte Nachricht einen neuen Dienst auslöst;
falls die empfangene dritte Nachricht einen neuen Dienst auslöst, Auslösen des neuen Dienstes und Senden einer neuen SIP-Anforderungsnachricht an einen Anwendungsserver (21) entsprechend dem neuen Dienst;
anderenfalls Implementieren der Verbindungssteuerung und des Routing.

10. Verfahren nach Anspruch 9, wobei der Prozess zum Implementieren der Verbindungssteuerung und des Routing das Bestimmen, ob ein angerufener Anwender in einer Domäne des IMS ist, umfasst;
Senden einer SIP-Anforderungsnachricht an eine Dienstanrufsitzungs-Steuerfunktion in einer Heimdomäne des angerufenen Anwenders, falls der angerufene Anwender in der Domäne des IMS ist;
anderenfalls Senden einer SIP-Anforderungsnachricht an eine Breakout-Gatewaysteuerfunktion.

11. Verfahren nach Anspruch 8, wobei die Dienststeuerung des PSTN/ISDN die Steuerung eines Basisdienstes, eines Zusatzdienstes und eines erweiterten Mehrwertdienstes wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst.

12. Verfahren nach Anspruch 8, das ferner Folgendes umfasst:
vor Umsetzen der ersten Nachricht in die SIP-Anforderungsnachricht und Senden der SIP-Anforderungsnachricht an die CSCF in dem IMS, Steuern eines Basisdienstes und eines Zusatzdienstes des PSTN/ISDN; wobei die durch den ersten Anwendungsserver implementierte Dienststeuerung des PSTN/ISDN die Steuerung eines erweiterten Mehrwertdienstes wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst.

13. Verfahren nach Anspruch 8, wobei die erste Nachricht das Protokoll H.248, das Media Gateway Control-Protokoll, das SIP oder das IUA/VSUA over SIGTRAN-Protokoll annimmt.

14. Verfahren zum Verarbeiten eines Paketdomänendienstsignals, wenn ein Anwender einen ankommenden Anruf vornimmt, wobei das Verfahren Folgendes umfasst:
Konfigurieren einer Anwenderidentität und einer Identität einer Zugangsgatewayfunktion AGF (40) durch eine Zugangsgateway-Steuerfunktion AGCF (30);
beim Empfang einer Sitzungsinitiierungsprotokoll-Anforderungsnachricht, SIP-Anforderungsnachricht, Auslösen (410) eines Dienstes in Übereinstimmung mit Anwenderabonnementinformationen durch eine Anrufsitzungs-Steuerfunktion CSCF (11) in einer Heimdomäne des angerufenen Anwenders und Senden (420) einer vierten Nachricht an einen ersten Anwendungsserver (20);
beim Empfang der vierten Nachricht, Implementieren (430) einer Dienststeuerung eines öffentlichen Fernsprechwählnetzes PSTN/diensteintegrierenden digitalen Netzes ISDN und Senden (430) einer fünften Nachricht an die CSCF (11) durch den ersten Anwendungsserver (20);
beim Empfang der fünften Nachricht, Implementieren (440) der Verbindungssteuerung und des Routing und Senden (440) einer Sitzungsinitiierungsprotokoll-Anforderungsnachricht, SIP-Anforderungsnachricht, an die AGCF (30) durch die CSCF (11);
beim Empfang der SIP-Anforderungsnachricht, Auffinden (450) der AGF (40), auf die der angerufene Anwender zugreift, und eines Anwenderports in Übereinstimmung mit der Identität des angerufenen Anwenders durch die AGCF (30), Umsetzen (450) der SIP-Anforderungsnachricht in eine sechste Nachricht und Benachrichtigen (450) der Zugangsgatewayfunktion zum Senden eines Signals eines ankommenden Anrufs an ein Teilnehmergerät (50), das ein Dienstsignal des PSTN/ISDN verarbeitet.

15. Verfahren nach Anspruch 14, wobei die Prozesse des Implementierens der Verbindungssteuerung und des Routing und des Sendens der SIP-Anforderungsnachricht an die AGCF (30) Folgendes umfassen:
beim Empfang der fünften Nachricht, Bestimmen, ob ein neuer Dienst ausgelöst wird;
falls der neue Dienst ausgelöst wird, Auslösen des neuen Dienstes und Senden einer SIP-Anforderungsnachricht an einen Anwendungsserver (22) entsprechend dem neuen Dienst;
anderenfalls Implementieren der Verbindungssteuerung und des Routing und Senden einer SIP-Anforderungsnachricht an die AGCF (30).

16. Verfahren nach Anspruch 14, wobei die durch den ersten Anwendungsserver (20) implementierte Dienststeuerung des PSTN/ISDN die Steuerung eines Basisdienstes, eines Zusatzdienstes und eines erweiterten Mehrwertdienstes wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst.

17. Verfahren nach Anspruch 14, wobei die durch den ersten Anwendungsserver (20) implementierte Dienststeuerung des PSTN/ISDN die Steuerung eines erweiterten Mehrwertdienstes wie etwa Netzverzeichnis, Instant Message, Anwesenheitsdienst, Unified Message-Dienst, Click Dialling, Click Transfer, Click Queue, Click Convention, intelligentes Routing, kundenangepasster Rückrufton, Farbbild des anrufenden Anwenders, Aufgabenanpassung und -aufforderung und Selbsthilfemanagement umfasst;
wobei die AGCF (30) beim Empfang der SIP-Anforderungsnachricht bestimmt, ob ein Basisdienst und ein Zusatzdienst des PSTN/ISDN ausgelöst werden;
wobei, falls der Basisdienst und der Zusatzdienst ausgelöst werden, die AGCF (30) den Basisdienst und den Zusatzdienst, die ausgelöst werden, steuert und bestimmt, ob die Sitzungssteuerung für den ankommenden Anruf erneut auszuführen ist;
wobei, falls bestimmt wird, dass die Sitzungssteuerung für den ankommenden Anruf erneut auszuführen ist, die AGCF (30) eine SIP-Anforderungsnachricht an die CSCF sendet und die CSCF die Sitzungssteuerung erneut weiter implementiert;
wobei, falls bestimmt wird, dass die Sitzungssteuerung für den ankommenden Anruf nicht erneut auszuführen ist, der ankommende Anruf abgeschlossen wird;
wobei, falls der Basisdienst und der Zusatzdienst nicht ausgelöst werden, die AGCF (30) die AGF (40), auf die der angerufene Anwender zugreift, und einen Anwenderport in Übereinstimmung mit der Identität des angerufenen Anwenders auffindet, die SIP-Anforderungsnachricht in die sechste Nachricht umsetzt und die AGF (40) benachrichtigt, um ein Signal des ankommenden Anrufs an das Teilnehmergerät (50), das das Dienstsignal des PSTN/ISDN verarbeitet, zu senden.

18. Verfahren nach Anspruch 14, wobei die sechste Nachricht das Protokoll H.248, das Media Gateway Control-Protokoll, das SIP oder das IUA/V5UA over SIGTRAN-Protokoll annimmt.

## Revendications

1. Système de traitement d'un signal de service d'un domaine par paquets, comprenant :
un Sous-Système Multimédia selon le Protocole Internet, IMS (10), et **caractérisé en ce qu'**il comprend :
au moins une fonction de passerelle d'accès, AGF, (40) pour mettre en oeuvre une fonction de conversion entre une voix sur bande étroite dans un domaine par circuits et un flux multimédia selon le Protocole Internet, IP, dans un domaine par paquets, et
une fonction de conversion entre une sign alisation d'interface utilisateur dans le domaine par circuits et une signalisation de commande d'appel dans le domaine par paquets ; et
au moins une fonction de commande de passerelle d'accès, AGCF (30), pour mettre en oeuvre une gestion d'accès et une commande d'appel pour l'AGF (40), pour configurer une identité d'utilisateur et une identité d'AGF pour un utilisateur dans le domaine par circuits, et pour permettre à un équipement utilisateur (50) qui sollicite l'AGCF (30) par le biais de l'AGF (40) de solliciter une Fonction de Commande de Session d'Appel, CSCF, (11) dans l'IMS, l'AGCF (30) comprenant un moyen pour obtenir l'identité d'utilisateur d'un utilisateur appelant en fonction de l'identité de l'AGF et d'une identité de port utilisateur, ou pour localiser une AGF (40) et un port utilisateur que sollicite un utilisateur appelé en fonction de l'identité d'utilisateur ; et convertir entre un Protocole de Lancement de Session, SIP, et un protocole d'interface d'une interface par le biais de laquelle l'AGCF (30) est connectée à l'AGF (40).

2. Système selon la revendication 1, comprenant en outre un premier serveur d'application (20) pour fournir une fonction de commande de service d'un Réseau Téléphonique Commuté Public, PSTN, / Réseau Numérique à Intégration de Services, ISDN, en fonction d'un déclenchement de service de la CSCF.

3. Système selon la revendication 2, dans lequel le premier serveur d'application (20) comprend un moyen pour mettre en oeuvre la commande de service du PSTN/ISDN dont la commande d'un service de base, d'un service supplémentaire et d'un service à valeur ajoutée étendu, tel que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance.

4. Système selon la revendication 2, dans lequel l'AGCF (30) comprend un moyen pour traiter un service de base et un service supplémentaire du PSTN/ISDN ; et le premier serveur d'application (20) comprend un moyen pour traiter un service à valeur ajoutée étendu, tel qu'un Client Web, les services tels que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance.

5. Système selon la revendication 1, dans lequel l'AGCF (30) comprend un moyen pour générer une requête de facturation en fonction d'un besoin défini par une norme de l'IMS, et envoyer la requête de facturation à une unité de collecte de facturation dans l'IMS.

6. Système selon la revendication 1 ou 2, dans lequel l'AGCF (30) comprend un moyen pour mettre en oeuvre un enregistrement et une authentification de l'AGF (40).

7. Système selon la revendication 1, dans lequel l'interface adopte l'un du Protocole H.248, du Protocole de Commande de Passerelle Multimédia, du SIP et du protocole IUA/V5UA sur SIGTRAN.

8. Procédé de traitement d'un signal de service d'un domaine par paquets, quand un utilisateur fait un appel sortant, le procédé comprenant :
la configuration, par une fonction de commande de passerelle d'accès, AGCF, (30), d'une identité d'utilisateur et d'une identité d'une fonction de passerelle d'accès, AGF, (40) ;
le transfert (320), par l'AGF (40), d'un premier message à l'AGCF (30) à la réception d'un signal de numérotation depuis un équipement utilisateur (50) traitant un signal de service d'un Réseau Téléphonique Commuté Public, PSTN, / Réseau Numérique à Intégration de Services, ISDN ;
à la réception du premier message, l'obtention (330) par l'AGCF (30) de l'identité d'utilisateur en fonction de l'identité de l'AGF (40) et d'une identité de port utilisateur, la conversion (330) du premier message en un message de requête selon le Protocole de Lancement de Session, SIP, et l'envoi (330) du message SIP à une Fonction de Commande de Session d'Appel, CSCF (11), dans un Sous-Système Multimédia selon le Protocole Internet, IMS ;
la mise en oeuvre (340, 360, 370), par la CSCF (11), d'un déclenchement de service en fonction des informations d'abonnement d'utilisateur, et l'envoi d'un second message à un premier serveur d'application (20) ;
à la réception du second message, la mise en oeuvre (350) par le premier serveur d'application (20), d'une commande de service du PSTN/ISDN, et la notification à la CSCF (11) de continuer de mettre en oeuvre la commande de session par un troisième message.

9. Procédé selon la revendication 8, dans lequel le processus de continuation de la mise en oeuvre de la commande de session comprend :
la détermination que le troisième message reçu déclenche ou non un nouveau service ;
si le troisième message déclenche un nouveau service, le déclenchement du nouveau service et l'envoi d'un nouveau message de requête SIP à un serveur d'application (21) correspondant au nouveau service ;
autrement, la mise en oeuvre d'une commande de connexion et d'un routage.

10. Procédé selon la revendication 9, dans lequel le processus de mise en oeuvre de la commande de connexion et du routage comprend la détermination qu'un utilisateur appelé se trouve ou non dans un domaine de l'IMS ;
si l'utilisateur appelé se trouve dans le domaine de l'IMS, l'envoi d'un message de requête SIP à une Fonction de Commande de Session d'Appel de Desserte dans un domaine de rattachement de l'utilisateur appelé ;
autrement, l'envoi d'un message de requête SIP à une fonction de commande de décrochage de passerelle.

11. Procédé selon la revendication 8, dans lequel la commande de service du PSTN/ISDN comprend la commande d'un service de base, d'un service supplémentaire et d'un service à valeur ajoutée étendu, tels que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance.

12. Procédé selon la revendication 8, comprenant en outre :
avant la conversion du premier message en le message de requête SIP, et l'envoi du message de requête SIP au CSCF dans l'IMS, la commande d'un service de base et d'un service supplémentaire du PSTN/ISDN ; dans lequel la commande de service du PSTN/ISDN mise en oeuvre par le premier serveur d'application comprend la commande d'un service à valeur ajoutée étendu, tel que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance.

13. Procédé selon la revendication 8, dans lequel le premier message adopte l'un du Protocole H.248, du Protocole de Commande de Passerelle Multimédia, du SIP et du protocole IUA/V5UA sur SIGTRAN.

14. Procédé de traitement d'un signal de service de domaine par paquets, quand un utilisateur fait un appel entrant, le procédé comprenant :
la configuration, par une fonction de commande de passerelle d'accès, AGCF, (30), d'une identité d'utilisateur et d'une identité d'une fonction de passerelle d'accès, AGF, (40) ;
à la réception d'un message de requête selon le Protocole de Lancement de Session, SIP, le déclenchement (410) par une Fonction de Commande de Session d'Appel, CSCF (11), dans un domaine de rattachement de l'utilisateur appelé, d'un service en fonction d'informations d'abonnement d'utilisateur, et l'envoi (420) d'un quatrième message à un premier serveur d'application (20) ;
à la réception du quatrième message, la mise en oeuvre (430), par le premier serveur d'application (20), d'une commande de service d'un Réseau Téléphonique Commuté Public, PSTN, / Réseau Numérique à Intégration de Services, ISDN, et l'envoi (430) d'un cinquième message à la CSCF (11) ;
à la réception du cinquième message, la mise en oeuvre (440) par la CSCF (11) d'une commande de connexion et d'un routage, et l'envoi (440) d'un message de requête selon le Protocole de Lancement de Session, SIP, à l'AGCF (30) ;
à la réception du message de requête SIP, la localisation (450) par l'AGCF (30), de l'AGF (40) que l'utilisateur appelé sollicite et d'un port utilisateur selon l'identité d'utilisateur appelé, la conversion (450) du message de requête SIP en un sixième message et la notification (450) à la fonction passerelle d'accès d'envoyer un signal d'appel entrant à un équipement utilisateur (150) traitant un signal de service du PSTN/ISDN.

15. Procédé selon la revendication 14, dans lequel les processus de mise en oeuvre de la commande de connexion et du routage, et l'envoi du message de requête SIP à l'AGCF (30) comprennent :
à la réception du cinquième message, la détermination qu'un nouveau service est déclenché ou non ;
si le nouveau service est déclenché, le déclenchement du nouveau service et l'envoi d'un nouveau message de requête SIP à un serveur d'application (22) correspondant au nouveau service ;
autrement, la mise en oeuvre de la commande de connexion et du routage et l'envoi d'un message de requête SIP à l'AGCF (30).

16. Procédé selon la revendication 14, dans lequel la commande de service du PSTN/ISDN mise en oeuvre par le premier serveur d'application (20) comprend la commande d'un service de base, d'un service supplémentaire et d'un service à valeur ajoutée étendu, tel que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance.

17. Procédé selon la revendication 14, dans lequel la commande de service du PSTN/ISDN mise en oeuvre par le premier serveur d'application (20) comprend la commande d'un service à valeur ajoutée étendu, tel que annuaire de réseau, messagerie instantanée, service Présence, service de messages unifiés, numérotation par clic, transfert par clic, mise en file d'attente par clic, convention de clic, routage intelligent, tonalité de rappel personnalisée, image colorée d'utilisateur appelant, personnalisation et invite de tâche, et gestion d'auto-assistance ;
à la réception du message de requête SIP, l'AGCF (30) détermine si un service de base et un service supplémentaire du PSTN/ISDN sont déclenchés ou non ;
si le service de base et le service supplémentaire sont déclenchés, l'AGCF (30) commande le service de base et le service supplémentaire qui sont déclenchés, et déterminer s'il convient ou non d'exécuter à nouveau la commande de session pour l'appel entrant ;
s'il est déterminé qu'il convient d'exécuter à nouveau la commande de session pour l'appel entrant, l'AGCF (30) envoie un message de requête SIP à la CSCF, et la CSCF continue de mettre en oeuvre à nouveau la commande de session ;
s'il est déterminé qu'il ne convient pas d'exécuter à nouveau la commande de session pour l'appel entrant, il est mis fin à l'appel entrant ;
si le service de base et le service supplémentaire ne sont pas déclenchés, l'AGCF (30) localise l'AGF (40) que l'utilisateur appelé sollicite et un port utilisateur en fonction de l'identité d'utilisateur appelé, convertit le message de requête SIP en le sixième message, et notifie l'AGF (40) d'envoyer un signal d'appel entrant à l'équipement utilisateur (50) traitant le signal de service du PSTN/ISDN.

18. Procédé selon la revendication 14, dans lequel le sixième message adopte l'un du Protocole H.248, du Protocole de Commande de Passerelle Multimédia, du SIP et du protocole IUA/V5UA sur SIGTRAN.
